# EUROPEAN PATENT SPECIFICATION

(11) **EP 4 343 140 B1**
(45) Date of publication and mention of the grant of the patent: **19.02.2025**
(21) Application number: 23198712.4
(22) Date of filing: 21.09.2023
(51) Int. Cl.: F03D 5/00, F03D 5/06

(54) **WIND APPARATUS TO MAXIMIZE THE AMOUNT OF KINETIC ENERGY ASSOCIATED WITH AN AIR FLOW CAPTURED OVER TIME BY SAID WIND APPARATUS**
WINDVORRICHTUNG, UM DIE MENGE AN KINETISCHER ENERGIE ZU MAXIMIEREN, DIE MIT EINEM LUFTSTROM VERBUNDEN IST, DER IM LAUFE DER ZEIT VON DER WINDVORRICHTUNG ERFASST WIRD
APPAREIL ÉOLIEN POUR MAXIMISER LA QUANTITÉ D'ÉNERGIE CINÉTIQUE ASSOCIÉE À UN FLUX D'AIR CAPTURÉ AU FIL DU TEMPS PAR LEDIT APPAREIL ÉOLIEN

(30) Priority: 23.09.2022 IT 202200019611
(43) Date of publication of application: 27.03.2024
(73) Proprietor: Consiglio Nazionale delle Ricerche, 00185 Roma (IT)
(72) Inventor: LODATO, Carmelo, 00185 Roma (IT); MARSALA, Giuseppe, 00185 Roma (IT)
(74) Representative: Ferriero, Paolo

(56) References cited:
- WO-A2-2010/150032
- US-A1- 2014 367 973
- US-A1- 2020 056 589

## Description

The present invention relates to a wind apparatus to maximize the amount of kinetic energy associated with an air flow captured over time by said wind apparatus.

In particular, the invention relates to a structure of a wind apparatus comprising at least one bladed device provided with at least one blade, wherein said bladed device is controlled to change its aerodynamic behaviour over time based on the action exerted by said air flow over time on said one or more blades of said bladed device.

An air flow is due to a pressure difference (i.e. air moves from a high pressure zone to a low pressure zone).

The air flow can be an air flow generated by a natural cause, such as a change in pressure from meteorological origin, or an air flow generated by a moving object, such as a moving elevator or a moving vehicle, such as a vehicle moving through a gallery or tunnel.

The vehicle can be a train or a subway or a truck or a car.

### Prior art

Currently, several wind apparatus are known to capture the kinetic energy contained in an air flow.

This kinetic energy is transformed into mechanical energy and this mechanical energy is transformed into electrical energy through a wind-powered generator.

A first example of a known type of wind apparatus for generating electric energy consists of a wind turbine generator.

In general, there are two categories of wind generator: a horizontal axis wind generator and a vertical axis wind generator.

A horizontal axis wind generator is mainly used in an environment where the wind direction does not vary significantly.

A vertical axis generator is mainly used in an environment where the wind direction can vary significantly.

However, regardless of the type of wind generator, said horizontal axis wind generator and said vertical axis wind generator have some common disadvantages.

A first disadvantage is given by the fact that said wind generators supply a maximum power in a predetermined range of wind speed values.

Furthermore, the efficiency of said wind generators decreases when the intensity and/or direction of the wind changes/change rapidly over time.

Therefore, each type of wind generator is chosen and sized according to the characteristics of the air flow present in the site where said wind generator is to be positioned.

A second disadvantage is given by the cost due to the need to design and build a wind generator with technical characteristics (referring, for example, to the materials used for the components) which take into account the characteristics of the environment (referring to the presence of harmful elements for the components of the wind generator) in which said wind generator is positioned to prevent said wind generator from being damaged.

For example, in sites where debris and/or dust are present and/or can be carried by the air, these wind generators can be easily damaged, so that repair interventions are necessary with the consequent costs.

An example of a prior art system is disclosed in US 2014/367973 A1.

### Aim of the invention

The aim of the present invention is to overcome said disadvantages, providing a wind apparatus for maximizing the amount of kinetic energy associated with an air flow captured over time by said wind apparatus, wherein said wind apparatus has a simple mechanical structure and a low manufacturing cost, and comprises at least one bladed device provided with one or more blades, wherein said bladed device is controlled to change its aerodynamic behaviour over time based on the action exerted by said air flow on said one or more blades.

Consequently, said wind apparatus is designed to capture an amount of kinetic energy even when the intensity and/or direction of an air flow changes/change rapidly over time.

In particular, said at least one bladed device can be shaped and sized to be positioned in any site and said wind apparatus is provided with a logic control unit to change the aerodynamic behaviour of said bladed device over time based on the action exerted by said air flow on said one or more blades of said bladed device.

### Object of the invention

The object of the invention is a wind apparatus according to claim 1.

Further preferred embodiments of said wind apparatus are described in the dependent claims.

### Attached figure list

The present invention will be now described, for illustrative, but not limitative purposes, according to its embodiments, making particular reference to the enclosed figures, wherein:
Figure 1 shows a first embodiment of the wind apparatus comprising a first wind system, wherein said first wind system comprises a first bladed device;
Figure 2 shows the wind apparatus of Figure 1 in which a part of the frame has been removed to show the first bladed device of the first wind system;
Figure 3 shows the first bladed device of the first wind system of the wind apparatus of Figure 1;
figure 4 shows a first alternative referring to the connection means for connecting a first rotating element of the first bladed device to a first shaft;
figures 5A and 5B show a second alternative referring to the connection means for connecting a first rotating element of the first bladed device to a first shaft, when a slider of the first bladed device moves respectively in a first direction and in a second direction, opposite to said first direction;
Figure 6 is a first view showing the first bladed device of the first wind system connected to a plurality of electric energy generators;
Figure 7 is a second view showing the first bladed device of the first wind system connected to a plurality of electric energy generators;
Figure 8 shows a second embodiment of the first wind system comprising a further first bladed device;
Figure 9A shows a detail referring to the connecting means for connecting said further first bladed device to the first bladed device;
Figure 9B shows a detail referring to a further rotating element of said connecting means for connecting said further first bladed device to the first bladed device;
Figure 10 shows a third embodiment of the wind apparatus comprising a second wind system comprising a second bladed device;
Figure 11 shows the wind apparatus of Figure 10 from which the frame has been removed to show in detail the second wind system comprising the second bladed device, as well as the first wind system comprising a first bladed device and a further first bladed device;
Figures 12A and 12B show the connecting means for connecting a second rotating element of the second bladed device to a second shaft, when a slider of the second bladed device moves respectively in a first direction and in a second direction, opposite to said first direction;
Figure 13 is a first view showing the second bladed device of the second wind system connected to the same plurality of electric power generators to which the first bladed device and the further first bladed device of the first wind system are connected;
Figure 14 is a second view showing the second bladed device of the second wind system connected to the same plurality of electric power generators to which the first bladed device and the further first bladed device of the first wind system are connected;
Figure 15 is a third view showing a first shaft of the first wind system and a second shaft of the second wind system connected to a gearbox by which the first bladed device and the further first bladed device of the first wind system and the second bladed device of the second wind system are connected to said plurality of electric energy generators;
Figure 16 shows a fourth embodiment in which said wind apparatus comprises a third wind system comprising a third bladed device;
Figure 17 shows a detail of the third wind system of Figure 16 relating to a blade constrained to a slider sliding in a guide element;
Figure 18 is a view of a further detail of the third wind system of Figure 16 relative to motion transmission means for transmitting the motion from a third rotating element to a third shaft of said third wind system;

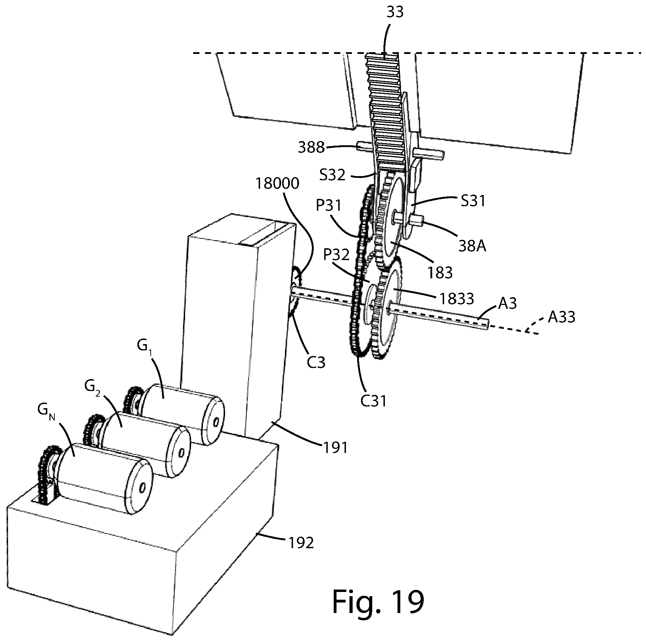

Figure 19 is a view of the further detail shown in Figure 18, in which the third shaft of the third bladed device of the third wind system is connected to a plurality of electric energy generators.

### Detailed description of the invention

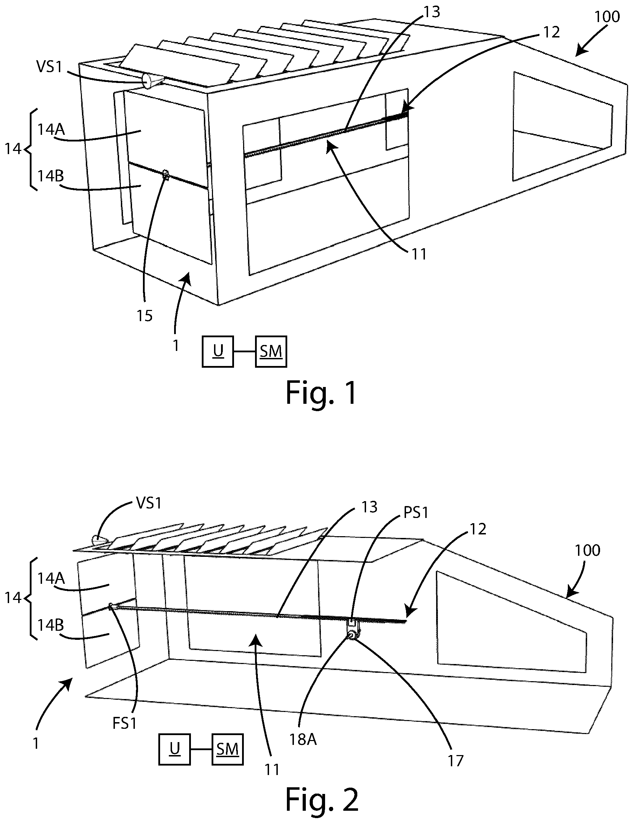

With particular reference to Figure 1, a first embodiment of a wind apparatus is described for maximizing the amount of kinetic energy associated with an air flow captured over time by said wind apparatus.

The figures show different wind systems that can be part of the wind system, individually or in combination with each other.

Furthermore, the airflow is not shown in the figures.

For simplicity, the direction of said air flow can be considered horizontal, for example from left to right.

However, the direction of the air flow can be any direction, without departing from the scope of the invention.

Said first wind system 1 comprises at least one first bladed device 11 comprising:
a first guide element 12 defining a first trajectory comprising one or more segments, each of which is delimited by a first end point and a second end point,
a first slider 13 sliding on said first guide element 12 in a first direction and in a second direction, opposite to said first direction,
at least one first blade 14 orientable in space with respect to a direction of an air flow and constrained to said first slider 13 in such a way that, when said air flow incides on said first blade 14, said air flow moves said first blade 14 and the movement of said first blade 14 causes the movement of said first slider 13 along said first guide element 12 in said first direction or in said second direction,
first blade rotation means 15 for rotating said first blade 14 in space with respect to said first slider 13, so as to change an angle between said first blade 14 and the direction of said air flow.

As shown in Figure 1, the wind apparatus comprises a frame 100 and said first bladed device 11 is arranged inside said frame 100.

The frame 100 is sized and shaped to receive the first wind system and ensure the correct positioning of each element of said at least one first bladed device 11.

In the embodiment being described, said frame 100 is schematically represented by a box-like body.

However, the frame 100 can have any shape and size, without departing from the scope of the invention.

With reference to said first guide element 12, in the example being described, said first guide element 12 has a rectilinear shape, so that each segment of said first trajectory is a rectilinear segment.

However, said first guide element 12 can have a shape other than rectilinear, without departing from the scope of the invention.

With reference to said first slider 13, in the embodiment being described, said first slider 13 is a first rack.

With reference to said first blade 14, said first blade 14 can comprise at least a first part 14A and a second part 14B connected to each other.

Said first blade rotating means 15 are configured to rotate said first part 14A and said second part 14B independently of each other, so that an aerodynamic force acting on said first blade 14 is maximized along the same direction in which the first slider 13 moves along said first guide element 12 and the aerodynamic behaviour of said first bladed device 11 changes over time to maximize the amount of kinetic energy of said air flow captured by said first blade 14.

In particular, said first part 14A and said second part 14B of said first blade 14 are movable between:
a first position, wherein said first part 14A and said second part 14B of said first blade 14 lie on a first plane, perpendicular to the direction of said air flow, so that said first blade 14 offers the maximum aerodynamic resistance to the air flow that incides on said first blade 14 and that said air flow moves said first blade 14 in said first direction along said segment of said first trajectory, and
a second position, wherein said first part 14A and said second part 14B of said first blade 14 are overlapped and lie on a second plane, perpendicular to said first plane and parallel to the direction of said air flow, so that said first blade 14 offers the minimum aerodynamic resistance to the air flow that incides on said first blade 14, when said first blade 14 moves in said second direction along said segment of said first trajectory.

With reference to said first blade rotation means 15, said first blade rotation means 15 can comprise a first electro-mechanical actuator configured to receive a signal from the control logic unit (mentioned below) and to rotate said first blade 14.

In the embodiment being described, said first blade rotating means 15 comprise a first hinge connected to the first part 14A and to the second part 14B of the first blade 14 to rotate said first part 14A and said second part 14B, wherein said first hinge is an electric hinge configured to be controlled by said control logic unit U. Consequently said first hinge is provided with a control module for receiving a signal sent by control logic unit U and for rotating said first blade 14.

Said first wind system 1 comprises at least one first position sensor PS1 for detecting the position of said first blade 14.

The expression "position of the first blade" means the position of the point where said first blade 14 is constrained to said first slider 13.

The position of the first blade 14 can coincide with the position of the first slider 13 with respect to a reference on the first bladed device 11.

In the example being described, said first position sensor PS1 is preferably included in said first bladed device 11.

With reference to said first position sensor PS1, said first position sensor PS1 is positioned on first supporting means for supporting first guide rotation means 17 (mentioned later), wherein said first supporting means are connected to the first support element guide 12.

In particular, said first supporting means comprise a first bracket S11 and a second bracket S12, facing the first bracket S11, and said first position sensor PS1 is arranged on an end portion of said first bracket S11.

Said first supporting means comprise a shaft 18A which passes through a respective hole of each bracket S11, S12.

Said wind apparatus comprises storage means SM and a logic control unit U connected to said storage means SM, as well as to said first position sensor PS1 and to said first blade rotating means 15.

With reference to said storage means SM, at least the following data are stored in said storage means SM:
the position of each end point of each segment of said first trajectory (i.e. the position of the first end point and the position of the second end point of each segment of said first trajectory),
for each end point of each segment of said first trajectory a plurality of predetermined distances between said first slider 13 and said end point, wherein each predetermined distance of said plurality of predetermined distances is associated with a respective predetermined velocity of said first blade 14, with a respective predetermined orientation of said first blade 14 and with a respective predetermined orientation of a segment of said first trajectory.

Said segment can be the segment on which said first blade 14 moves to reach an end point (which may be said first end point or said second end point) or the segment towards which said first blade moves, i.e. the segment arranged in succession to the segment on which said first blade moves.

In the first embodiment being described, said storage means SM comprise a memory and are external to the control logic unit U.

However, said storage means SM can be included in said control logic unit U, without departing from the scope of the invention.

Before going into the details of the tasks performed by the control logic unit U, it should be noted that, when reference is made to the velocity of a blade, said velocity is a vector quantity.

As known, a vector quantity is defined by at least three parameters: the module also called intensity, the direction and orientation.

Therefore, in description, the terms "module" and "intensity" have the same meaning.

In the next sentence reference will be made to the velocity of the first blade 14, however, the concept that the velocity of a blade is a vector quantity is to be applied also to the velocity of a further first blade 14', to the velocity of a second blade 24 and to the velocity of a third blade 34, mentioned later in this description.

With reference to the logic control unit U, said logic control unit U is configured to:
o acquire over time a plurality of positions of said first slider 13, through said first position sensor PS1,
o calculate:
   a first position difference between a position of said first slider 13 acquired in a time instant *tⱼ*, with j=1,2...N, wherein N is a positive integer, and a position acquired in a previous time instant *t*_{*j*-1},
   a time difference between said time instant *tⱼ* and said previous time instant *t*_{*j*-1},
   a second position difference between the position of an end point of a segment of said first trajectory towards which said first blade 14 moves, wherein said position is stored in said storage means SM, and the position of said first slider 13 (acquired through said first position sensor PS1),
   the velocity of said first blade 14 with an intensity or module equal to the ratio between said first position difference and said time difference, and
   the distance of said first blade 14 with respect to said end point of said segment of said first trajectory equal to the result of said second position difference,
o when said distance (i.e. the distance of said first blade 14 with respect to said end point of said segment of said first trajectory) is equal to a predetermined distance of said plurality of predetermined distances, send a signal to said first blade rotation means 15 for rotating said first blade 14 in such a way that said first blade 14 has an orientation equal to a stored predetermined orientation which is selected on the basis of the correspondence between the distance of said first slider 13 from an end point of said segment of said first trajectory and a predetermined distance stored and the correspondence between the calculated velocity of said first blade and a stored predetermined velocity of said first blade, so that the aerodynamic behaviour of said first bladed device 11 changes over time to maximize the amount of kinetic energy of said air flow captured by said first blade 14.

It is preferable that said first bladed device 11 comprises first guide rotation means 17 for rotating said first guide element 12 in the space.

With reference to said first guide rotation means 17, said first guide rotation means 17 can comprise a further electro-mechanical actuator for receiving a signal sent by the logic control unit U and for rotating said first guide element 12 around said shaft 18A (i.e. the shaft passing through the holes of the two brackets S11, S12 mentioned above).

For example said electro-mechanical actuator can be a stepping motor.

Furthermore, in the example being described, said first guide rotation means 17 are arranged around said shaft 18A and positioned on a further end portion of said first bracket S11 of said first support means. Although not shown in the figure, said first guide rotation means 17 are connected or fixed to a first portion of the frame 100 of the wind apparatus, for example by means of a first bar.

Said logic control unit U can be configured to send a signal to said first rotation means 17 for rotating said first guide element 12 in such a way that said first guide element 12 has an orientation equal to a stored predetermined orientation which is selected on the basis of the correspondence between the distance of said first slider 13 from an end point of said segment of said first trajectory and a stored predetermined distance and the correspondence between the calculated velocity of said first blade and a stored predetermined velocity of said first blade, so that the aerodynamic behaviour of said first bladed device 11 changes over time to further maximize the amount of kinetic energy of said air flow captured by said first blade 14.

Furthermore, said first wind system 1 can comprise:
- at least one first velocity sensor VS1 for detecting the velocity of the air flow incident on said first blade 14, and
- at least one first force sensor FS1 for detecting a force acting on said first blade 14.

The following data can be further stored in said storage means SM:
a plurality of predetermined air flow velocities, and
a plurality of predetermined forces, wherein each predetermined force of said plurality of predetermined forces is associated with a respective predetermined air flow velocity of said plurality of predetermined air flow velocities, a respective predetermined velocity of said first slider 13, a respective predetermined orientation of said first blade 14 and a respective predetermined orientation of said segment of said first trajectory on which said first blade 14 moves to reach an end point.

Said logic control unit U can be configured to:
∘ acquire a plurality of velocities of the air flow over time, through said first velocity sensor VS1,
∘ acquire a plurality of forces acting on said first blade 14 over time, through said first force sensor FS1,
∘ compare
   the velocity of the air flow detected through said first velocity sensor VS1 with each predetermined air flow velocity stored in said storage means SM, and
   the velocity of said first blade 14 with each predetermined velocity of said first blade stored in said storage means SM,
   to obtain a predetermined force selected on the basis of the correspondence between the acquired air flow velocity and a stored predetermined air flow velocity and of the correspondence between the calculated velocity of said first blade and a stored predetermined velocity of said first blade,
∘ compare each acquired force with said predetermined force,
∘ if an acquired force is less than said predetermined force, send a signal to said first blade rotation means 15 to rotate said first blade 14 in such a way that said first blade 14 has an orientation equal to a stored predetermined orientation which is selected on the basis of said predetermined force.

Said logic control unit U can be configured to send a signal to said first guide rotation means 17 to rotate said first guide element 12 so that said first guide element 12 has an orientation equal to a stored predetermined orientation which is selected on the basis of the correspondence between the acquired air flow velocity and a stored predetermined air flow velocity and the correspondence between the calculated velocity of said first blade and a stored predetermined velocity of said first blade.

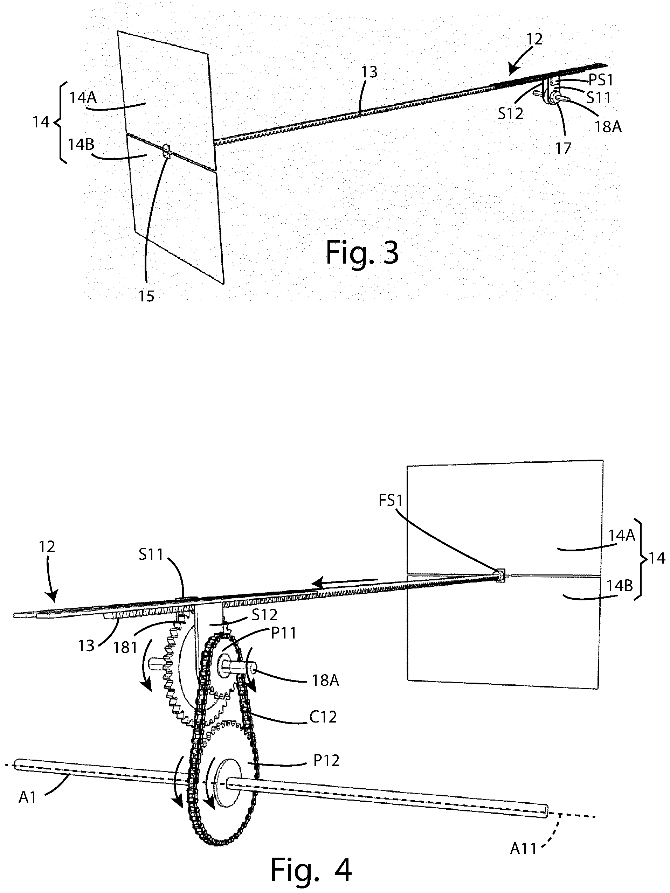

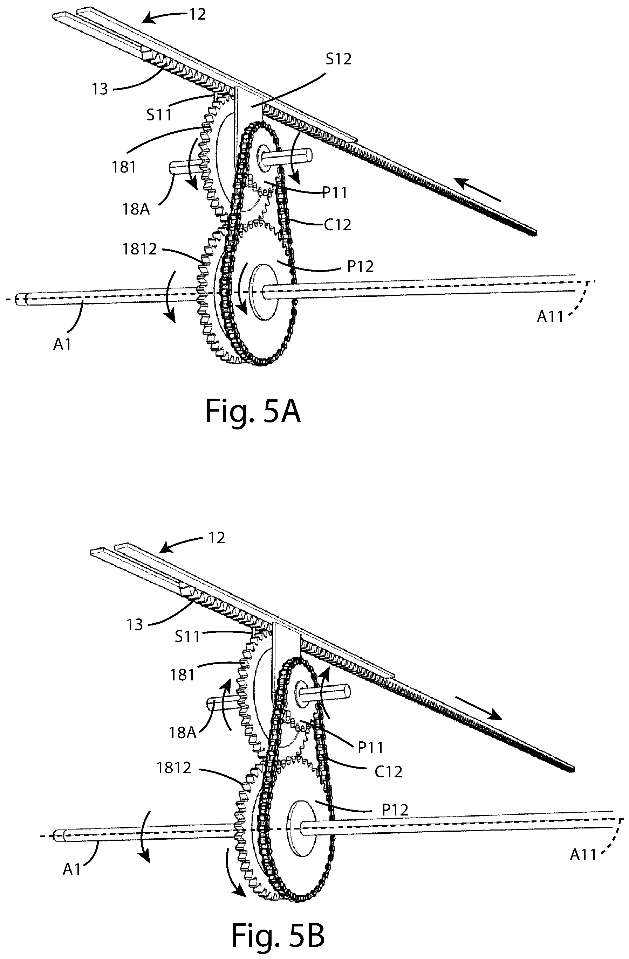

Said first wind system 1 can comprise (Figures 4 and 5):
- a first motion transmission mechanism comprising:
   at least one first rotating element 181 connected to said first slider 13 in such a way that the movement of said first slider 13, due to the movement of said first blade 14 in said first direction or in said second direction, causes respectively the rotation of said first rotating element 181 in a first direction or in a second direction,
   a first shaft A1 having a rotation axis A11 and configured to rotate around said rotation axis A11 in a predetermined direction,
   first connecting means for connecting said first rotating element 181 to said first shaft A1, in such a way that the rotation of said first rotating element 181 in said first direction causes the rotation of said first shaft A1 in said predetermined direction or that the rotation of said first rotating element 181 in said first direction and in said second direction causes the rotation of said first shaft A1 in said predetermined direction.

Said first wind system 1 is configured to transfer said amount of kinetic energy to said first shaft A1, so that the kinetic energy of the air flow is transformed in rotation mechanical energy of said first shaft A1.

Regardless of whether the first rotating element 181 rotates in a first direction or in a second direction, the first shaft A1 (connected to said first rotating element 181) rotates in only one predetermined direction.

In the example being described, with reference to said first motion transmission mechanism, said first rotating element 181 is a first gear wheel which is engaged with said first slider 13 (i.e. said first rack) and rotates with the shaft 18A which passes through each hole of the above mentioned brackets S11, S12.

Said first rotating element 181 is arranged between said first bracket S11 and said second bracket S12.

With reference to said first connecting means, in a first alternative (shown in Figure 4), said first connecting means can comprise a pulley P11 rotating with the same shaft 18A with which said first rotating element 181 rotates.

Said pulley P11 is connected to a further pulley P12 by means of a belt C12, wherein said further pulley P12 is a freewheel pulley and rotates around said first axis A11.

In particular, when said further pulley P12 rotates around said first axis A11 in said first direction it causes rotation of said first shaft A1 in said first direction (in the example being described the first direction of the first shaft A1 coincides with the predetermined direction).

When said further pulley P12 rotates about said first axis A11 in said second direction, said further pulley P12 rotates idle with respect to said first shaft A1 and therefore does not exert any action on said first shaft A1.

In particular, when said first slider 13 (i.e. said first rack) moves in a first direction, said first rotating element 181 causes rotation of said shaft 18A in a first direction.

The rotation of said shaft 18A causes the rotation of said pulley P11 in a first direction and, through said belt C12, the motion of pulley P11 is transmitted to the further pulley P12, so that said further pulley P12 rotates around said first axis A11 in a first direction causing rotation of said first shaft A1 in its predetermined direction.

When said first slider 13 (i.e. said first rack) moves in a second direction, opposite to said first direction, said first rotating element 181 causes rotation of said shaft 18A in a second direction.

The rotation of said shaft 18A causes the rotation of said pulley P11 in a second direction and, through said belt C12, the motion of pulley P11 is transmitted to the further pulley P12, so that said further pulley P12 rotates around said first axis A11 in a second direction.

However, as mentioned above, in this case, said further pulley P12 rotates idle with respect to said first shaft A1 and therefore does not affect the rotation of said first shaft A1.

In other words, in said first alternative, said first shaft A1 rotates in its predetermined direction only when said first slider 13 moves in said first direction.

In a second alternative (shown in Figures 5A and 5B), differently from the first alternative, said first connecting means can comprise a further gear wheel 1812 engaged with said first rotating element 181 (i.e. said first gear wheel) and rotating around said first axis A11.

Said further gear wheel 1812 is a freewheel gear wheel.

In particular, when said further gear wheel 1812 rotates around said first axis A11 in said first direction it causes rotation of said first shaft A1 in said first direction (in the example being described the first direction of the first shaft coincides with the predetermined direction ).

When said further gear wheel 1812 rotates about said first axis A11 in said second direction, said further gear wheel 1812 rotates idle with respect to said first shaft A1 and therefore does not exert any action on said first shaft A1.

In said second alternative, when the further pulley P12 rotates in a first direction, the further gear wheel 1812 rotates idle around the first shaft A1 in a second direction.

The rotation of said further pulley P12 causes the rotation of said first shaft A1 in its predetermined direction.

When the further gear wheel 1812 rotates about said first axis A11 in said first direction, the further pulley P12 rotates idle about said first shaft A1 in said second direction.

The rotation of said further gear wheel 1812 in said first direction causes rotation of said first shaft A1 in said first direction (which, as already mentioned, coincides with the predetermined direction).

In other words, in said second alternative, said first shaft A1 rotates in its predetermined direction both when said first slider 13 moves in said first direction and when it moves in said second direction.

Advantageously, by means of this latter alternative, said first blade 14 can capture kinetic energy even when the direction of the air flow changes rapidly over time from a first direction to a second direction and vice versa.

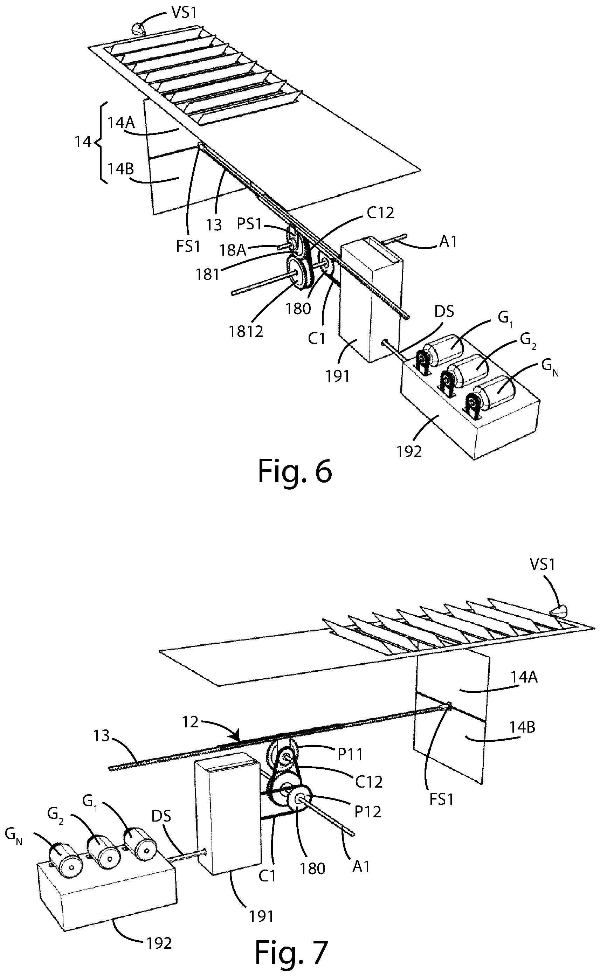

As shown in Figure 6, said wind apparatus can comprise:
- a drive shaft DS,
- a motion transmission mechanism for transmitting the motion to said drive shaft DS comprising:
   connecting means for connecting said first shaft A1 to said drive shaft DS, so that the rotation of said first shaft A1 causes the rotation of said drive shaft DS.

With reference to said connecting means for connecting said first shaft A1 to said drive shaft DS, said connecting means for connecting said first shaft A1 to said drive shaft DS comprise:
a first input shaft (not shown),
a gear wheel (not shown) rotating with said first input shaft,
a first output shaft (not shown) connected to said drive shaft DS, and
a gear wheel 180 rotating with said first shaft A1 and connected, by means of a belt C1, to said gear wheel rotating with said first input shaft.

In particular, the first input shaft, the rotating gear wheel with said first input shaft and the first output shaft are arranged inside a gearbox 191, while the gear wheel 180 rotating with said first shaft A1 is external to said 191 gearbox.

The first output shaft is connected to the drive shaft DS via a first mechanical element (not shown) which is arranged inside the gearbox 191.

Said first mechanical element can be a first friction element, for example a first friction gear wheel.

The gearbox 191 further comprises a first plurality of mechanisms for connecting said first input shaft to said first output shaft so as to vary the transmission ratio between said first input shaft and said first output shaft.

At least one mechanism of said first plurality of mechanisms can be an electromechanical device configured to receive a signal from the logic control unit U to vary said transmission ratio.

Accordingly, the control logic unit U can be configured to send a signal to said at least one mechanism of said first plurality of mechanisms to vary said transmission ratio.

In other words, the motion of the first shaft A1 is transmitted via the belt C1 to the first input shaft inside the gearbox 191, and via said first plurality of mechanisms from the first input shaft to the first output shaft and finally via the first mechanical element from the first output shaft to the drive shaft DS.

In the example being described, said drive shaft DS is partially arranged inside said gearbox 191.

In the first embodiment being disclosed, said wind apparatus comprises a plurality of electric energy generators G₁,G₂...G_{N} to generate electric energy.

Each electric energy generator G₁,G₂...G_{N} of said plurality of electric energy G₁,G₂...G_{N} comprises a respective shaft and one or more shafts of respective electric energy generators G₁,G₂...G_{N} of said plurality of electric energy generators G₁,G₂...G_{N} are connected to said drive shaft DS.

Consequently, the number of electric energy generators connected to said drive shaft DS can be equal to one or greater than one.

Said motion transmission mechanism for transmitting motion from said drive shaft DS to at least one shaft of a respective electric energy generator G₁,G₂...G_{N}, comprises connecting means for connecting/disconnecting said drive shaft DS to/from one or more respective shafts of electric energy generators G₁,G₂...G_{N} of said plurality of electric energy generators G₁,G₂...G_{N}.

With reference to said connecting means for connecting/disconnecting said drive shaft DS to/from one or more respective shafts of electric energy generators G₁,G₂...G_{N}, said connecting means for connecting/disconnecting said drive shaft DS to/from one shaft of an electric energy generators comprise:
a further gearbox 192 comprising a further plurality of mechanisms to vary the transmission ratio between the drive shaft DS and the shaft of each electric energy generators G₁,G₂...G_{N}.

In particular, said further gearbox 192 comprises inside:
A respective mechanism (not shown), such as a bevel gear, for each electric energy generator G₁,G₂...G_{N}, in which each mechanism is connected to said drive shaft DS,
a respective gear wheel (not shown) for each electric energy generator G₁,G₂...G_{N}, wherein each gear wheel is connected to a shaft of a respective electric energy generator G₁,G₂...G_{N}, by means of a respective belt,
a respective electromechanical device (not shown), for example a friction disc, for connecting/disconnecting said mechanism to said gear wheel.

Each electromechanical device is configured to receive a signal by said logic control unit U so as to connect/disconnect the shaft of a respective electric energy generator G₁,G₂...G_{N} to/from the drive shaft DS.

A plurality of predetermined power values and a respective predetermined number of electric energy generators associated with each predetermined power value of said plurality of predetermined power values are stored in said storage means SM.

Said logic control unit U is configured to:
∘ calculate a power value starting from the force acquired through said first force sensor FS1 and from the calculated velocity of said first blade and from the number of said one or more electric energy generators G₁,G₂...G_{N} connected to said drive shaft DS,
∘ compare said power value with each predetermined power value to determine the predetermined number of electric energy generators associated with said predetermined power value,
∘ compare the number of electric energy generators G₁,G₂...G_{N} connected to said drive shaft DS with said predetermined number of electric energy generators,
∘ if the number of electric energy generators G₁,G₂...G_{N} connected to said drive shaft DS is less than said predetermined number of electric energy generators,
   calculate a difference between said predetermined number of electric energy generators and said number of electric energy generators and the result of said difference is the number of electric energy generators G₁,G₂...G_{N} to be connected to said drive shaft DS, and
   send a control signal to said connecting means containing an information concerning the result of said difference to connect a respective number of electric energy generators to said drive shaft DS,
∘ if the number of electric energy generators G₁,G₂...G_{N} connected to said drive shaft DS is greater than said predetermined number of electric energy generators,
   calculate a difference between said number of electric energy generators G₁,G₂...G_{N} and said predetermined number of electric energy generators and the result of said difference is the number of electric energy generators G₁,G₂...G_{N} to be disconnected from said drive shaft DS, and send a control signal to said connecting means containing an information concerning the result of said difference to disconnect a respective number of electric energy generators from said drive shaft DS.

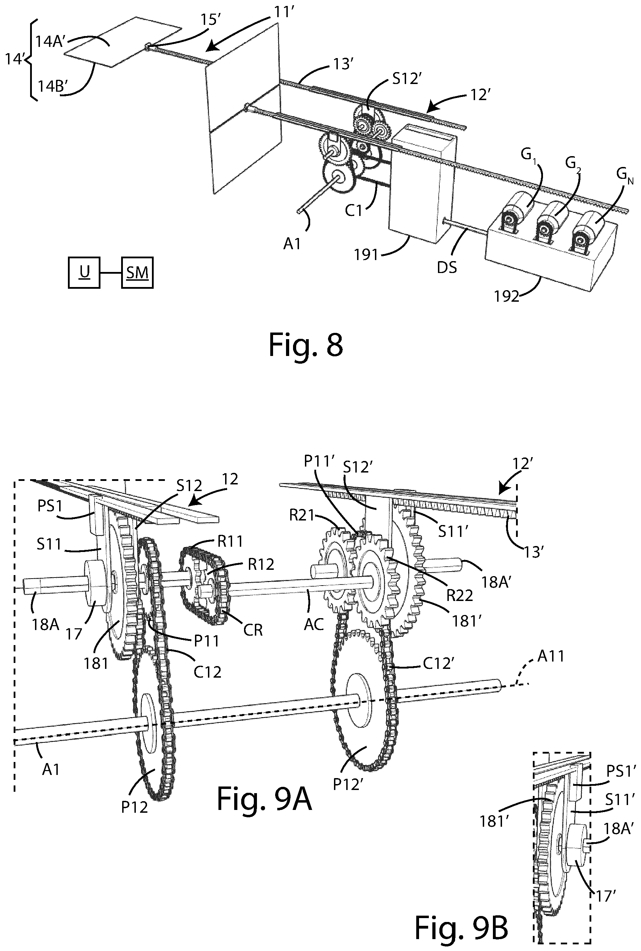

In a second embodiment, shown in Figure 8, said first wind system 1 comprises a further first bladed device 11'.

Said further first bladed device 11' comprises:
a further first guide element 12' defining a further first trajectory comprising one or more segments, each of which is delimited by a first end point and a second end point,
a further first slider 13' sliding on said further first guide element 12' in a first direction and in a second direction, opposite to said first direction, at least one a further first blade 14' orientable in space with respect to a direction of said air flow and constrained to said further first slider 13' in such a way that, when said air flow incides on said further first blade 14', the movement of said further first blade 14' causes the movement of said further first slider 13' along said further guide element 12' in said first direction or in said second direction,
further first blade rotation means 15' for rotating said further first blade 14' in space with respect to said further first slider 13'.

With reference to said further first guide element 12', in the example being described, said further first guide element 12' has a rectilinear shape, so that each segment of said further first trajectory is a rectilinear segment.

However, said further first guide element 12' can have a shape other than rectilinear, without departing from the scope of the invention.

With reference to said further first slider 13', in the embodiment being described, said further first slider 13' is a further first rack.

With reference to said further first blade 14', said further first blade 14' can comprise at least a first part 14A' and a second part 14B' connected to each other.

Said further first blade rotation means 15' are configured to rotate said first part 14A' and said second part 14B' of said further first blade 14' independently of each other, so that an aerodynamic force acting on said further first blade 14' is maximized along the same direction in which said further first slider 13' moves along said further first guide element 12' and the aerodynamic behaviour of said further first bladed device 11' changes over time to maximize the amount of kinetic energy of said air flow captured by said further first bladed device 14'.

In particular, said first part 14A' and said second part 14B' of said further first blade 14' are movable between:
a first position, wherein said first part 14A' and said second part 14B' of said further first blade 14' lie on a first plane, perpendicular to the direction of said air flow, so that said further first blade 14' offers the maximum aerodynamic resistance to the air flow that incides on said further first blade 14' and that said air flow moves said further first blade 14' in said first direction along said segment of said further first trajectory, and
a second position, wherein said first part 14A' and said second part 14B' of said further first blade 14' are overlapped and lie on a second plane, perpendicular to said first plane and parallel to the direction of said air flow, so that said further first blade 14' offers the minimum aerodynamic resistance to the air flow that incides on said further first blade 14' when said further first blade 14' moves in said second direction along said segment of said further first trajectory.

With reference to said further first blade rotation means 15', said further first blade rotation means 15' can comprise a further first electro-mechanical actuator configured to receive a signal from the logic control unit and to rotate the further first blade 14'.

In the embodiment being described, said further blade rotation means 15' comprise a further first hinge connected to the first part 14A' and to the second part 14B' of the further first blade 14' to rotate said first part 14A' and said second part 14B', wherein said further first hinge is a further electric hinge configured to be controlled by said control logic unit U. Accordingly said further first hinge is provided with a control module for receiving a signal sent by the logic control unit U e to rotate said further first blade 14'.

Said first wind system 1 comprises a further first position sensor PS1' to detect the position of said further first blade 14'.

The expression "position of the further first blade" means the position of the point at which said further first blade 14' is constrained to said further first slider 13'.

The position of the further first blade 14' can coincide with the position of the further first slider 13' with respect to a reference on the further first bladed device 11'.

In the example described, said further first position sensor is preferably included in said further first bladed device 11'.

With reference to said further first position sensor PS1' (Figure 9B), said further first position sensor PS1' is positioned on further first supporting means for supporting further first guide rotation means 17' (mentioned later), wherein said further first supporting means are connected to the further first guide element 12'.

In particular, said further first supporting means comprise a first bracket S11' and a second bracket S12', facing the first bracket S11', and said further first position sensor PS1' is arranged on an end portion of said first bracket S11'.

Said further first supporting means comprise a shaft 18A' (shown in Figures 9A and 9B) which passes through a respective hole of each bracket S11', S12' of said further first support means.

With reference to the second embodiment of the wind apparatus; the following data are further stored in said storage means SM:
the position of each end point of each segment of said further first trajectory (i.e. the position of the first end point and the position of the second end point of each segment of said further first trajectory),
for each end point of each segment of said further first trajectory a plurality of predetermined distances between said further first slider 13' and said end point, wherein each predetermined distance of said plurality of predetermined distances is associated with a respective predetermined velocity of said further first blade 14', with a respective predetermined orientation of said further first blade 14' and with a respective predetermined orientation of a segment of said further first trajectory.

Said segment can be the segment on which said further first blade 14' moves to reach an end point (which can be the first end point or the second end point) or the segment towards which said further first blade 14' moves, i.e. the segment arranged in succession to the segment to which said further first blade moves.

In the second embodiment being described, said logic control unit U can be configured to:
said logic control unit (U) is configured to:
o acquire over time a plurality of positions of said further first slider 13', through said further first position sensor PS1',
o calculate:
   a first position difference between a position of said further first slider 13' acquired in time instant *tⱼ*, with j=1,2...N, wherein N is a positive integer, and a position acquired in a previous time instant *t*_{*j*-1},
   a time difference between said time instant *tⱼ* and said previous time instant *t*_{*j*-1},
   a second position difference between the position of an end point of a segment towards said further first blade 14' moves, wherein said position is stored in said storage means SM, and the position of said further first slider 13',
   the velocity of said further first blade 14' with an intensity or module equal to the ratio between said first position difference and said time difference, and
   the distance of said further first blade 14' with respect to said end point of said segment of said further first trajectory equal to the result of said second position difference,
∘ when said distance is equal to a predetermined distance of said plurality of predetermined distances, send a signal to said further first blade rotation means 15' for rotating said further first blade 14' in such a way that said further first blade 14' has an orientation equal to a stored predetermined orientation which is selected on the basis of the correspondence between the distance of said further first slider 13' from an end point of said segment of said further first trajectory and a stored predetermined distance and on the correspondence between the calculated velocity of said further first blade and a stored predetermined velocity of said further first blade, so that the aerodynamic behaviour of said further first bladed device 11' changes over time to maximize the amount of kinetic energy of said air flow captured by said further first blade 14'.

It is preferable that said further first bladed device 11' comprises further first guide rotation means 17' for rotating said further first guide element 12' in space.

With reference to said further first guide rotation means 17', said further first guide rotation means 17' can comprise a further first electro-mechanical actuator for receiving a signal sent by the logic control unit U and for rotating said further first guide element 12' around the shaft 18A' of said further first supporting means.

For example said further first electro-mechanical actuator can be a further stepping motor.

Furthermore, in the example being described, said further first guide rotation means 17' are arranged around said shaft 18A' of said further first supporting means and positioned on a further end portion of said first bracket S11' of said further first supporting means.

Although not shown in the Figure, said further first guide rotation means 17' are connected or fixed to a further first portion of the frame 100 of the wind apparatus, for example by means of a further first bar.

Said logic control unit U can be configured to send a signal to said further first guide rotation means 17' for rotating said further first guide element 12' in such a way that said further first guide element 12' has an orientation equal to a stored predetermined orientation which is selected on the basis of the correspondence between the distance of said further first slider 13' from an end point of said segment of said further first trajectory and a stored predetermined distance and on the correspondence between the calculated velocity of said further first blade and a stored predetermined velocity of said further first blade, so that the aerodynamic behaviour of said further first bladed device 11' changes over time to further maximize the amount of kinetic energy of said air flow captured by said further first bladed 14'.

In the second embodiment being described, said first motion transmission mechanism comprises (shown in Figures 9A and 9B):
at least one further first rotating element 181' connected to said further first slider 13' of said further first bladed device 11' in such a way that the movement of said further first slider 13', due to the movement of said further first blade 14' in said first direction or in said second direction, respectively causes rotation of said further first rotating element 181' in a first direction or in a second direction, and
further first connecting means for connecting said further first rotating element 181' to said first shaft A1, so that rotation of said further first rotating element 181' in said first direction causes rotation of said first shaft A1 in said predetermined direction or that the rotation of said further first rotating element 181' in said first direction and in said second direction causes the rotation of said first shaft A1 in said predetermined direction.

Said first wind system 1 (comprising said first bladed device 11 and said further first bladed device 11') is configured to transfer said amount of kinetic energy to said first shaft A1, so that the kinetic energy of the air flow is transformed into rotational mechanical energy of said first shaft A1.

With reference to said further first connecting means, said further first connecting means comprise a rotating pulley P11' with the same shaft 18A' with which said further first rotating element 181' rotates.

Said pulley P11' is connected to a further pulley P12' via a belt C12', in which said further pulley P12' is a freewheel pulley and rotates around said first axis A11.

In particular, when said further pulley P12' rotates around said first axis A11 in said first direction it causes rotation of said first shaft A1 in said first direction (in the example which is described the first direction of the first shaft A1 coincides with the predetermined direction).

When said further pulley P12' rotates around said first axis A11 in said second direction, said further pulley P12' rotates idle with respect to said first shaft A1 and therefore does not exert any action on said first shaft A1.

In particular, when said further first slider 13' (i.e. said further first rack) moves in a first direction, said further first rotating element 181' causes rotation of said shaft 18A' in a first direction.

The rotation of said shaft 18A' causes the rotation of said pulley P11' in a first direction and, through said belt C12', the motion of pulley P11' is transmitted to the further pulley P12', so that said further pulley P12' rotates around said first axis A11 in a first direction causing rotation of said first shaft A1 in its predetermined direction.

When said further first slider 13' (i.e. said further first rack) moves in a second direction, opposite to said first direction, said further first rotating element 181' causes rotation of said shaft 18A' in a second direction.

The rotation of said shaft 18A' causes the rotation of said pulley P11' in a second direction and, through said belt C12', the motion of pulley P11' is transmitted to the further pulley P12', so that said further pulley P12' rotates around said first axis A11 in a second direction.

However, as mentioned above, in this case, said further pulley P12' rotates idle with respect to said first shaft A1 and therefore does not affect the rotation of said first shaft A1.

In other words, said first shaft A1 rotates in its predetermined direction only when said further first slider 13' moves in said first direction.

Furthermore, said first motion transmission mechanism further comprises connecting means for connecting the first bladed device 11 to the further first bladed device 11' so that, when the first slider 13 of the first bladed device 11 moves in said first direction/second direction, the further first slider 13' of the further first bladed device 11' moves in said second direction/first direction.

In this case, said logic control unit U can be configured to send a signal to said further first blade rotation means 15' to rotate said further first blade 14' when the distance of said further first blade 14' with respect to said end point of said segment of said further first trajectory is equal to a stored predetermined distance.

Furthermore, said logic control unit U can be configured to send a signal to said further first guide rotation means 17' for rotating said further first guide element 12', when the distance of said further first blade 14' with respect to said end point of said segment of said further first trajectory is equal to a stored predetermined distance.

With reference to said connecting means for connecting the first bladed device 11 to the further first bladed device 11', said connecting means for connecting the first bladed device 11 to the further first bladed device 11' comprise:
- a first pair of gear wheels for the first bladed device 11, comprising:
   a first gear wheel R11 rotating with the shaft 18A passing through the holes of the two brackets S11, S12 mentioned above;
   a second gear wheel R12 connected via a belt CR to said first gear wheel R11 in such a way that rotation of said first gear wheel R11 in a first direction/second direction causes rotation of said second gear wheel R12 in said first direction/ second direction,
- a further first pair of gear wheels for the further first bladed device 11', comprising:
   a first gear wheel R21 rotating with the further shaft 18A' passing through the further holes of the two further brackets S11', S12' mentioned above; a second gear wheel R22, engaged with said first gear wheel R21,
- a connecting shaft AC for connecting the second gear wheel R12 of the first pair of gear wheels and the second gear R22 of the further first pair of gear wheels such that rotation of the second gear wheel R12 of the first pair of gear wheels in said first direction/second direction causes rotation of the second gear wheel R22 of the further first pair of gear wheels in said first direction/second direction.

Since the gear wheels of the further first pair of gear wheels are engaged with each other, rotation of the second gear wheel R22 of the further first pair of gear wheels in said first direction/second direction causes rotation of the first gear wheel R21 of the same further first pair of gear wheels in said second direction/first direction.

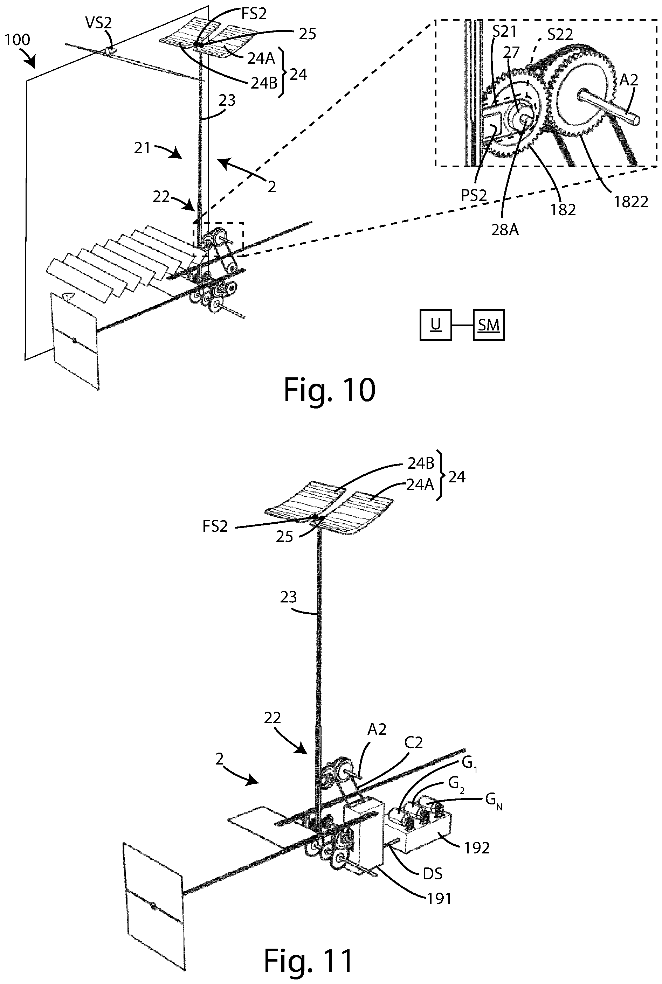

In a third embodiment shown in Figure 10, said wind apparatus comprises a second wind system 2.

Said second wind system comprises a second bladed device 21 comprising:
a second guide element 22 defining a second trajectory comprising one or more segments, each of which is delimited by a first end point and a second end point,
a second slider 23 sliding on said second guide element 22 in a first direction and in second direction, opposite said first direction,
at least one second blade 24 orientable in space with respect to a direction of an air flow and constrained to said second slider 23 in such a way that, when said air flow incides on said second blade 24, said air flow moves said second blade 24 and the movement of said second blade 24 causes the movement of said second slider 23 along said second guide element 22 in said first direction or in said second direction, second blade rotation means 25 for rotating said second blade 24 in space with respect to said second slider 23.

With reference to said second guide element 22, in the example being described, said second guide element 22 has a rectilinear shape, so that each segment of said second trajectory is a rectilinear segment.

However, said second guide element 22 can have a shape other than the rectilinear shape, without departing from the scope of the invention.

With reference to said second slider 23, in the embodiment being described, said second slider 23 is a second rack.

With reference to said second blade 24, said second blade 24 can comprise at least a first part 24A and a second part 24B connected to each other.

Said second blade rotation means 25 are configured to rotate said first part 24A and said second part 24B of said second blade 24 independently on each other, so that an aerodynamic force acting on said second blade 24 is maximized along the same direction in which the second slider 23 moves along said second guide element 22 and the aerodynamic behaviour of said second bladed device 21 changes over time to maximize the amount of kinetic energy captured by said second blade 24.

Said second blade 24 can have airfoil profile and said first part 24A and said second part 24B of said second blade 24 are movable between:
a first position, wherein said first part 24A and said second part 24B of said second blade 24 are rotated by said second blade rotation means 25 in such a way that said second blade 24 maximize said aerodynamic force in said first direction and that said aerodynamic force moves said second blade 24 in said first direction along said segment of said second trajectory, and
a second position, wherein said first part 24A and said second part 24B of said second blade 24 are rotated by said second blade rotation means 25 in such a way that said second blade 24 maximize said aerodynamic force in said second direction and that said aerodynamic force moves said second blade 24 in said second direction along said segment of said second trajectory.

The airfoil of the second blade 24 can be a symmetrical airfoil (such as NACA 0012) or an asymmetrical airfoil (such as NACA 64-415 AIRFOIL).

However, the second blade 24 can have any profile other than the airfoil.

For example, the second blade 24 can have the cross-sectional shape of an elliptical or a rectangle or a circular segment.

With reference to said second blade rotation means 25, said second blade rotation means 25 can comprise a second electro-mechanical actuator configured to receive a signal from the logic control unit U and to rotate said second blade 24.

In the embodiment being described, said second blade rotation means 25 comprise a second hinge connected to the first part 24A and to the second part 24B of the second blade 24 for rotating said first part 24A and said second part 24B, wherein said second hinge is an electric hinge configured to be controlled by said logic control unit U. Consequently said second hinge is provided with a control module for receiving a signal sent by the logic control unit U and for rotating said second blade 24.

Said second wind system 2 comprises at least one second position sensor PS2 for detecting the position of said second blade 24.

The expression "position of the second blade" means the position of the point where said second blade 24 is constrained to said second slider 23.

The position of the second blade 24 can coincide with the position of the first slider 23 with respect to a reference on the second bladed device 21.

In the example described, said second position sensor is preferably included in said second bladed device 21.

With reference to said second position sensor PS2, said second position sensor PS2 is positioned on second supporting means for supporting said second guide rotation means 27 (mentioned later), wherein said second supporting means are connected to the second guide element 22.

In particular, said second supporting means comprise a first bracket S21 and a second bracket S22, facing the first bracket S21, and said second position sensor PS2 is arranged on an end portion of said first bracket S21.

Said second supporting means comprise a shaft 28A which passes through a respective hole of each bracket S21, S22.

The second bracket S22 of said second supporting means is represented by a dashed line in the enlargement of Figure 10, because it is covered by the second rotating element 182 which also covers the pulley P21 (in particular the second bracket S22 is positioned between said second rotating element 182 and said pulley P21 rotating with the shaft 28A of said second supporting means), wherein said second rotating element 182 and said pulley P21 are described later.

With reference to the third embodiment, the following data are stored in said storage means SM:
the position of each end point of each segment of said second trajectory (i.e. the position of the first end point and the position of the second end point of each segment of said second trajectory),
for each end point of each segment of said second trajectory a plurality of predetermined distances between said second slider 23 and said end point, wherein each predetermined distance of said plurality of predetermined distances is associated with a respective predetermined velocity of said second bladed 24, a respective predetermined orientation of said second bladed 24 and a respective predetermined orientation of a segment of said second trajectory.

Said segment may be the segment on which said second blade 24 moves to reach an end point (which may be the first end point or the second end point) or the segment towards which said second blade 24 moves, i.e. the segment arranged in succession to the segment on which said second blade 24 moves.

In the third embodiment being described, said logic control unit U can be configured to:
∘ acquire over time a plurality of positions of said second slider 23, through said second position sensor PS2,
∘ calculate:
   a first position difference between a position of said second slider 23 acquired in a time instant *tⱼ*, with j=1,2...N, wherein N is a positive integer, and a position acquired in a previous time instant *t*_{*j*-1},
   a time difference between said time instant *tⱼ* and said previous time instant *t*_{*j*-1},
   a second position difference between the position of an end point of a segment of said second trajectory towards which the second blade 24 moves, wherein said position is stored in said storage means SM, and the position of said second slider 23,
   the velocity of said second blade 24 with an intensity or module equal to the ratio between said first position difference and said time difference, and
   the distance of said second blade 24 with respect to said end point of said segment of said second trajectory equal to the result of said second position difference,
∘ when said distance (i.e. the distance of said second blade 24 with respect to said end point of said segment of said second trajectory) is equal to a predetermined distance of said plurality of predetermined distances, send a signal to said second blade rotation means 25 for rotating said second blade 24 in such a way that said second blade 24 has an orientation equal to a stored predetermined orientation which is selected on the basis of the correspondence between the distance of said second slider 23 from an end point of said segment of said second trajectory and a stored predetermined distance and on the correspondence between the calculated velocity of said second blade and a stored predetermined velocity of said second blade, so that the aerodynamic behaviour of said second bladed device 21 changes over time to maximize the amount of kinetic energy of said air flow captured by said second blade 24.

It is preferable that said second bladed device 21 comprises second guide rotation means 27 for rotating said second guide element 22 in space.

With reference to said second guide rotation means 27, said second guide rotation means 27 can comprise a second electro-mechanical actuator for receiving a signal sent by the logic control unit U and for rotating said second guide element 22 around the shaft 28A of said second support means.

For example said second electro-mechanical actuator can be a second stepping motor.

Furthermore, in the example being described, said second guide rotation means 27 are arranged around said shaft 28A of said second supporting means and positioned on a further end portion of said further first bracket S21. Although not shown in the figure, said second guide rotation means 27 are connected or fixed to a second portion of the frame 100 of the wind apparatus, for example by means of a second bar.

Said logic control unit U can be configured to send a signal to said second guide rotation means 27 for rotating said second guide element 22 in such a way that said second guide element 22 has an orientation equal to a stored predetermined orientation which is selected on the basis of the correspondence between the distance of said second slider 23 from an end point of said segment of said second trajectory and a stored predetermined distance and on the correspondence between the calculated velocity of said second blade and a stored predetermined velocity of said second blade, so that the aerodynamic behaviour of said second bladed device 21 changes over time to further maximize the amount of kinetic energy of said air flow captured by said second blade 24.

Said second wind system 2 comprises:
- at least one second speed sensor VS2 for detecting the velocity of the air flow incident on said second blade 24,
- at least one second force sensor FS2 for detecting a force acting on said second blade 24.

The following data are stored in said storage means SM:
a plurality of predetermined air flow velocities,
a plurality of predetermined forces, wherein each of predetermined force of said plurality of predetermined forces is associated with a respective predetermined air flow velocity of said plurality of predetermined air flow velocities, a respective predetermined velocity of said second slider 23, a respective predetermined orientation of said second blade 24 and a respective predetermined orientation of said segment of said second trajectory on which said second blade 24 moves to reach an end point.

Said logic control unit U can be configured to:
∘ acquire a plurality of air flow velocities over time, through said second velocity sensor VS2,
∘ acquire a plurality of forces acting on said second blade 24 over time, through said second force sensor FS2,
∘ compare
   the velocity of the air flow detected through said second velocity sensor VS2 with each stored predetermined air flow velocity in said storage means SM, and
   the velocity of said second blade 24 with each predetermined velocity of said second blade stored in said storage means SM,
   to obtain a predetermined force selected on the basis of the correspondence between the acquired air flow velocity and a stored predetermined air flow velocity and of the correspondence between the calculated velocity of said second blade and a stored predetermined velocity of said second blade,
∘ compare each acquired force with said predetermined force,
   if an acquired force is less than said predetermined force, send a signal to said second blade rotation means 25 for rotating said second blade 24 in such a way that said second blade 24 has an orientation equal to a stored predetermined orientation which is selected on the basis of said predetermined force.

Said logic control unit U can be configured to send a signal to said guide rotation means 27 for rotating said second guide element 22 in such a way that said second guide element 22 has an orientation equal to a stored predetermined orientation which is selected on the basis of the correspondence between the acquired air flow velocity and a stored predetermined air flow and on the correspondence between the calculated velocity of said second blade and a stored predetermined velocity of said second blade.

Said wind system 2 comprises:
- a second motion transmission mechanism comprising:
   at least one second rotating element 182 connected to said second slider 23 in such a way that the movement of said second slider 23, due to the movement of said second blade 24 in said first direction or in said second direction, causes respectively the rotation of said second rotating element 182 in a fist direction or in a second direction,
   a second shaft A2 having a rotation axis A22 and configured to rotate around said rotation axis A22 in a predetermined direction,
   second connecting means for connecting said second rotating element 182 to said second shaft A2, in such a way that the rotation of said second rotating element 182 in said first direction causes the rotation of said second shaft A2 in said predetermined direction or that the rotation of said second rotating element 182 in said first direction and said second direction causes the rotation of said second shaft A2 in said predetermined direction.

In the example being described, the rotation of the second rotating element 182 causes the rotation of the second shaft A2 in the predetermined direction both when said second rotating element 182 rotates in the first direction and when it rotates in the second direction.

Said second wind system 2 is configured to transfer said quantity of kinetic energy to said second shaft A2, so that the kinetic energy of the air flow is transformed into rotational mechanical energy of said second shaft A2.

Regardless of whether the second rotating element 182 rotates in a first direction or in a second direction, the second shaft A2 connected to said second rotating element 182 rotates in only one predetermined direction.

In the example being described, with reference to said second motion transmission mechanism, said second rotating element 182 is a second gear wheel which is engaged with said second slider 23 (i.e. said second rack) and rotating with the shaft 28A of said second supporting means.

Said second rotating element 182 is arranged between said two brackets S21, S22.

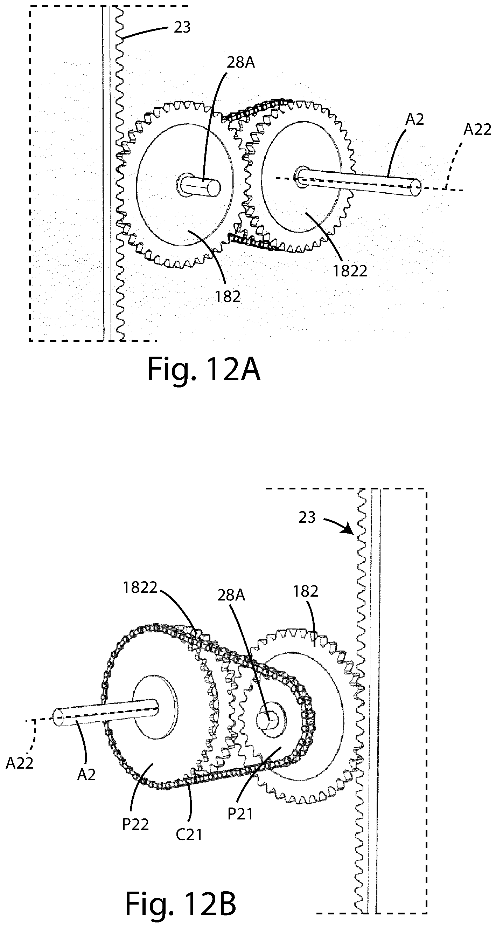

With reference to said second connecting means, said second connecting means can comprise (Figures 12A and 12B):
a rotating pulley P21 with the same shaft 28A with which said second rotating element 182 rotates,
a further pulley P22 connected to said pulley P21 via a belt C21, wherein said further pulley P22 is a freewheel pulley and rotates around said second axis A22,
a further gear wheel 1822 engaged with said second rotating element 182 (i.e. said second gear wheel) and rotating about said second axis A22, wherein said further gear wheel 1822 is a freewheel gear wheel.

When said second slider 23 (i.e. said second rack) moves in a first direction, said second rotating element 182 causes rotation of said shaft 28A of said second supporting means in a first direction.

The rotation of said shaft 28A of said second supporting means causes the rotation of said pulley P21 in a first direction and, through said belt C21, the motion of pulley P21 is transmitted to the further pulley P22, so that said further pulley P22 rotates about said second axis A22 in a first direction, causing rotation of said second shaft A2 in said first direction (in the example being described the first direction of the second shaft A2 coincides with the predetermined direction).

Since the further gear wheel 1822 is engaged with the second rotating element 182, said further gear wheel 1822 rotates idle around said second shaft A2 in said second direction and therefore does not exert any action on said second shaft A2.

When said second slider 23 (i.e. said second rack) moves in a second direction, opposite to said first direction, said second rotating element 182 causes rotation of said shaft 28A of said second supporting means in a second direction.

The rotation of said shaft 28A of said second supporting means causes the rotation of said pulley P21 in a second direction and, through said belt C21, the motion of the pulley P21 is transmitted to the further pulley P22, so that said further pulley P22 rotates idle about said second shaft A2 in a second direction, and does not affect the rotation of said second shaft A2.

Since the further gear wheel 1822 is engaged with the second rotating element 182, said further gear wheel 1822 rotates about said second axis A22 in said first direction, causing rotation of said second shaft A2 in said first direction (in the example being described the first direction of the second shaft A2 coincides with the predetermined direction).

In other words, said second shaft A2 rotates in its predetermined direction both when said second slider 23 moves in said first direction and when it moves in said second direction.

Advantageously, said second blade 24 can capture kinetic energy even when the direction of the air flow changes rapidly over time from the first direction to the second direction and vice versa.

Said motion transmission mechanism for transmitting motion to said drive shaft DS comprises connecting means for connecting said second shaft A2 to said drive shaft DS, so that the rotation of said first shaft A1 and the rotation of said second shaft A2 cause the rotation of said drive shaft DS.

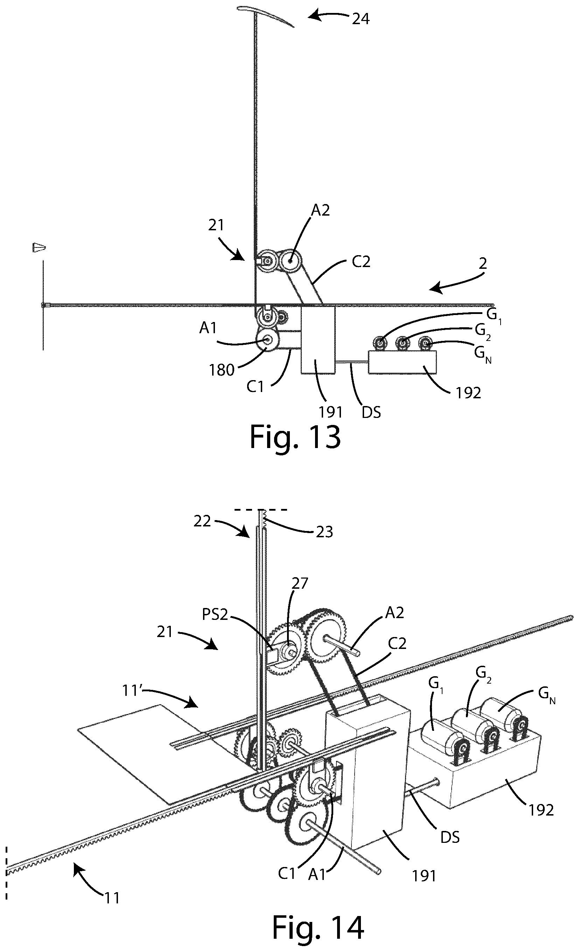

With reference to said connecting means for connecting said second shaft A2 to said drive shaft DS, said connecting means for connecting said second shaft A2 to said drive shaft DS comprise (Figures 13 to 15):
a second input shaft (not shown),
a gear wheel (not shown) rotating with said second input shaft,
a second output shaft (not shown) connected to said drive shaft DS, and
a gear wheel 1800 rotating with said second shaft A2 and connected, by means of a belt C2, to said gear wheel rotating with said second input shaft.

In particular, the second input shaft, the gear wheel rotating with said second input shaft and the second output shaft are arranged inside said gearbox 191, while the gear wheel 1800 rotating with said second shaft A2 is external to said gearbox 191.

The second output shaft is connected to the drive shaft DS via a second mechanical element (not shown) which is arranged inside the gearbox 191.

Said second mechanical element can be a second friction element, for example a second friction gear wheel.

The gearbox 191 further comprises a second plurality of gears for connecting said second input shaft to said second output shaft so as to vary the transmission ratio between said second input shaft and said second output shaft.

At least one gear of said second plurality of gears can be an electromechanical device configured to receive a signal from the logic control unit U to vary said transmission ratio.

Accordingly, the logic control unit U can be configured to send a signal to said at least one gear of said second plurality of gears to vary said transmission ratio.

In other words, the motion of the second shaft A2 is transmitted via the belt C2 to the second input shaft inside the gearbox 191, and via said second plurality of gears to the second output shaft and finally via the second mechanical element from second output shaft to drive shaft DS.

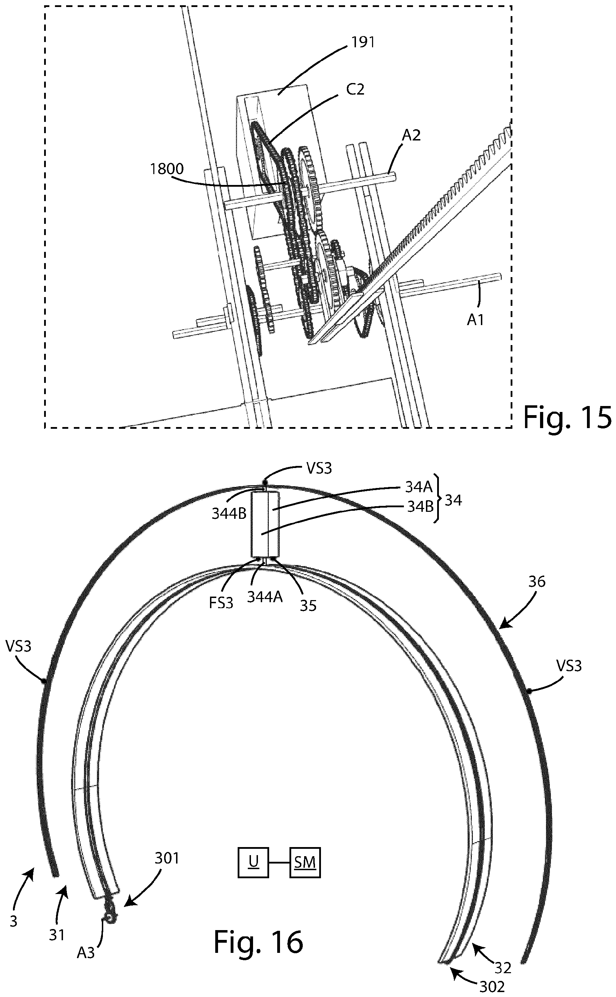

Figure 16 shows a fourth embodiment of the wind apparatus.

Said wind apparatus comprises a third wind system 3 and said third wind system 3 comprises a third bladed device 31.

Said third bladed device 31 comprises:
- a third guide element 32 having a curvilinear or substantial curvilinear shape defining a third trajectory comprising a plurality of segments, wherein each segment of said plurality of segments is delimited by a first end point and a second end point,
- a third slider 33 sliding on said third guide element 32 in a first direction and in a second direction, opposite to said first direction,
- at least one third blade 34 orientable in space with respect to a direction of an air flow and constrained to said third slider 33 in such a way that, when said air flow incides on said third blade 34, said air flow moves said third blade 34 and the movement of said third blade 34 causes the movement of said third slider 33 along said third guide element 32 in said first direction or in said second direction,
- third blade rotation means 35 for rotating said third blade 34 in space with respect to said third slider 33.

With reference to said third guide element 32, said plurality of segments can comprise one or more rectilinear segments and one or more curvilinear segments or only curvilinear segments.

In the embodiment being described, said third bladed device 31 comprises a supporting element 36 to support the sliding of said third blade 34 on said third guide element 32.

In particular, said third blade 34 is arranged between said third guide element 32 and said supporting element 36 and is provided with a first protrusion 344A to be engaged with the third slider 33 (so as to be constrained to said third slider 33) and with a second protrusion 344B sliding in a groove of said supporting element 36.

However, said supporting element 36 is not necessary.

In fact, said third bladed device 31 can be without said supporting element 36, without thereby departing from the scope of the invention.

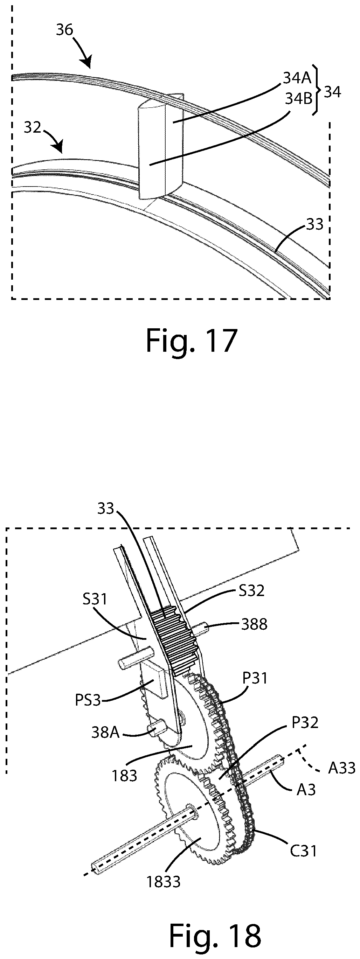

With reference to said third slider 33 (shown in particular in Figure 17), in the embodiment being described, said third slider 33 is a toothed belt.

Said toothed belt slides inside said third guide element 32 through two pulleys 301, 302, each of which is positioned at a respective end portion of said third guide element 32.

In other words, a first pulley 301 is positioned at a first end portion and a second pulley 302 is positioned at a second end portion of the third guide element 32, so that the movement of the third blade 34 causes rotation of said toothed belt on said pulleys 301, 302 in said first direction or in said second direction.

As already mentioned, the third blade 34 comprises a first protrusion 344A so that the third blade 34 is constrained to said toothed belt.

With reference to the third blade 34, said third blade 34 comprises at least a first part 34A and a second part 34B connected to each other.

Said third blade rotation means 35 are configured to rotate said first part 34A and said second part 34B of said third blade 34 independently on each other, so that an aerodynamic force acting on said third blade 34 is maximized along the same direction in which the third slider 33 moves along said third guide element 32, and the aerodynamic behaviour of said third bladed device 31 changes over time to maximize the amount of the kinetic energy captured by said third blade 34.

In particular, said third blade 34 can have an airfoil profile and said first part 34A and said second part 34B of said third blade 34 are movable between:
a first position, wherein said first part 34A and said second part 34B of said third blade 34 are rotated by said third blade rotation means 35 in such a way that said third blade 34 maximizes the aerodynamic force in said first direction and that said aerodynamic force moves said third blade 34 in said first direction along said segment of said third trajectory, and
a second position, wherein said first part 34A and said second part 34B of said third blade 34 are rotated by said third blade rotation means 35 in such a way that said third blade 34 maximizes the aerodynamic force in said second direction and that said aerodynamic force moves said third blade 34 in said second direction along said segment of said third trajectory.

Said third wind system comprises at least one third position sensor PS3 for detecting the position of said third blade 34 (shown in particular in Figure 18).

The expression "position of the third blade" means the position of the point where said third blade 34 is constrained to said third slider 33.

The position of the third blade 34 can coincide with the position of the third slider 33 with respect to a reference on the third bladed device 31.

In the embodiment being described, said third position sensor PS3 is preferably included in said third bladed device 31.

With reference to said third position sensor PS3, said third position sensor PS3 is positioned on third supporting means for supporting said first pulley 301 and a third rotating element 183 forming part of third connecting means for connecting said third rotating element 183 to a third shaft A3 (mentioned later), wherein said third supporting means are connected or fixed to the third guide element 32.

In particular, said third supporting means comprise a first bracket S31 and a second bracket S32, facing the first bracket S31, and said third position sensor PS3 is arranged on a portion of said first bracket S31.

Said third support means comprise a shaft 38A (for the rotation of said third rotating element 183) which passes through a respective hole of each bracket S31, S32 of said third supporting means, as well as a further shaft 388 (for the rotation of said first pulley 301) which passes through a respective further hole of each bracket S31, S32 of said third supporting means.

The following data are further stored in said storage means SM:
the position of each end point of each segment of said third trajectory (i.e. the position of the first end point and the position of the second end point of each segment of said third trajectory),
for each end point of each segment of said third trajectory a plurality of predetermined distances between said third slider 33 and said end point, wherein each predetermined distance of said plurality of predetermined distances is associated with a respective predetermined velocity of said third blade 34, and a respective predetermined orientation of said third blade 34.

Said logic control unit U is configured to:
∘ acquire a plurality of position values associated with said third slider 33 over time, through said third position sensor PS3,
∘ calculate:
   a first position difference between a position of said third slider 33 acquired in a time instant *tⱼ*, with j=1,2...N, wherein N is a positive integer, and a position acquired in a previous time instant *t*_{*j*-1},
   a time difference between said time instant *tⱼ* and said previous time instant *t*_{*j*-1},
   a second position difference between the position of an end point of a segment of said third trajectory towards which the third blade 34 moves, wherein said position is stored in said storage means SM, and the position of said third slider 33,
   the velocity of said third blade 34 with an intensity or module equal to the ratio between said first position difference and said time difference, and
   the distance of said third blade 34 with respect to said end point of said segment of said third trajectory equal to the result of said second position difference,
∘ when said distance of said third blade 34 (with respect to said end point of said segment of said third trajectory) is equal to a predetermined distance of said plurality of predetermined distances, send a signal to said third blade rotation means 35 for rotating said third blade 34 in such a way that said third blade 34 has an orientation equal to a stored predetermined orientation which is selected on the basis of the correspondence between the distance of said third slider 33 from an end point of said segment of said third trajectory and a stored predetermined distance and on the basis of the calculated velocity of said third blade and a stored predetermined velocity of said third blade, so that the aerodynamic behaviour of said third bladed device 31 changes over time to maximize the amount of kinetic energy of said air flow captured by said third blade 34.

Said third wind system 3 comprises:
- at least one third velocity sensor VS3 for detecting the velocity of the air flow incident on said third blade 34, and
- at least one third force sensor FS3 for detecting a force acting on said third blade 34.

In particular, in the example being described, said third wind system comprises three velocity sensors VS3, arranged along said supporting element 36 in such a way as to be spaced apart from each other, as shown in Figure 16.

The following data are stored in said storage means SM:
a plurality of predetermined air flow velocities,
a plurality of predetermined forces, wherein each predetermined force of said predetermined forces is associated with a respective predetermined air flow velocity of said predetermined air flow velocities, a respective predetermined velocity of said third slider 33, a respective predetermined orientation of said third blade 34.

Said logic control unit U is configured to:
∘ acquire a plurality of air flow velocities over time, through said third velocity sensor VS3,
∘ acquire a plurality of forces acting on said third blade 34 over time, through said third force sensor FS3,
∘ compare
   the velocity of the air flow detected through said third velocity sensor VS3 with each predetermined air flow velocity stored in said storage means SM, and
   the velocity of said third blade 34 with each predetermined velocity of said third blade stored in said storage means SM,
   to obtain a predetermined force selected on the basis of the correspondence between the acquired air flow velocity and a stored predetermined air flow velocity and on the correspondence between the calculated velocity of said third blade and a stored predetermined velocity of said third blade,
∘ compare each acquired force with said predetermined force,
   if an acquired force is less than said predetermined force, send a signal to said blade rotation means 35 for rotating said third blade 34 in such a way that said third blade 34 has an orientation equal to a stored predetermined orientation which is selected on the basis of said predetermined force.

Said third wind system 3 comprises a third motion transmission mechanism.

Said third motion transmission mechanism comprises (Figure 18):
- at least one third rotating element 183 connected to said third slider 33 (i.e. said toothed belt) in such a way that the movement of said third slider 33, due to the movement of said third blade 34 in said first direction or in said second direction, causes respectively the rotation of said third rotating element 183 in a first direction or in a second direction,
- a third shaft A3 having a rotation axis A33 and configured to rotate around said rotation axis A33 in a predetermined direction,
- third connecting means for connecting said third rotating element 183 and said third shaft A3, in such a way that the rotation of said third rotating element 183 in said first direction and in said second direction causes the rotation of said third shaft A33 in said predetermined direction.

Said third wind system 3 is configured to transfer said amount of kinetic energy to said third shaft A3, so that the kinetic energy of the air flow is transformed in rotational mechanical energy of said third shaft A3.

In the example which is described, with reference to said third motion transmission mechanism, said third rotating element 183 is a third gear wheel which is engaged with said third slider 33 (i.e. said toothed belt) and rotates with the shaft 38A of said third supporting means.

Said third rotating element 183 is arranged between said two brackets S31, S32.

With reference to said third connecting means, said third connecting means can comprise:
a pulley P31 rotating with the same shaft 38A with which said third rotating element 183 rotates,
a further pulley P32 connected to said pulley P31 via a belt C31, wherein said further pulley P32 is a freewheel pulley and rotates around said third axis A33.
a further gear wheel 1833 engaged with said third rotating element 183 (i.e. said third gear wheel 183) and rotating about said third axis A33, wherein said further gear wheel 1833 is a freewheel gear wheel.

When said third slider 33 (i.e. said toothed belt) moves in a first direction, said third rotating element 183 causes rotation of said shaft 38A of said third support means in a first direction.

The rotation of said shaft 38A of said third supporting means causes the rotation of said pulley P31 in a first direction and, through said belt C31, the motion of the pulley P31 is transmitted to the further pulley P32, so that said further pulley P32 rotates around said third axis A33 in a first direction, causing rotation of said third shaft A3 in said first direction (in the example being described the first direction of the third shaft A3 coincides with the predetermined direction).

Since the further gear wheel 1833 is engaged with the third rotating element 183, said further gear wheel 1833 rotates idle around said third shaft A3 in said second direction and therefore does not exert any action on said third shaft A3.

When said third slider 33 (i.e. said third toothed belt) moves in a second direction, opposite to said first direction, said third rotating element 183 causes rotation of said shaft 38A of said third supporting means in a second direction.

The rotation of said shaft 38A of said third supporting means causes the rotation of said pulley P31 in a second direction and, through said belt C31, the motion of the pulley P31 is transmitted to the further pulley P32, so that said further pulley P32 rotates idle with respect to said third shaft A3 and does not affect the rotation of said third shaft A3.

Since the further gear wheel 1833 is engaged with the third rotating element 183, said further gear wheel 1833 rotates about said third axis A33 in said first direction causing rotation of said third shaft A3 in said first direction (in the example being described the first direction of the third shaft A3 coincides with the predetermined direction).

In other words, said third shaft A3 rotates in its predetermined direction both when said third slider 33 moves in said first direction and when it moves in said second direction.

Advantageously, said third blade 34 can capture kinetic energy even when the direction of the air flow changes rapidly over time from the first direction to the second direction and vice versa.

Said motion transmission mechanism for transmitting motion to said drive shaft DS comprises connecting means for connecting said third shaft A3 to said drive shaft DS, so that the rotation of said first shaft A1, of said second shaft A2 and of said third shaft A3 cause rotation of said drive shaft DS.

With reference to said connecting means for connecting said third shaft A3 to said drive shaft DS, said connecting means for connecting said third shaft A3 to said drive shaft DS comprise:
a third input shaft (not shown),
a gear wheel (not shown) rotating with said third input shaft,
a third output shaft (not shown) connected to said drive shaft DS, and
a gear wheel 18000 rotating with said third shaft A3 and connected, by means of a belt C3, to said gear wheel rotating with said third input shaft.

In particular, the third input shaft, the gear wheel rotating with said third input shaft and the third output shaft are arranged inside said gearbox 191, while the gear wheel 18000 rotating with said third shaft A3 is external to said 191 gearbox.

The third output shaft is connected to the drive shaft DS via a third mechanical element (not shown) which is arranged inside the gearbox 191.

Said third mechanical element can be a third friction element, for example a third friction gear wheel.

The gearbox 191 further comprises a third plurality of mechanisms for connecting said third input shaft to said third output shaft so as to vary the transmission ratio between said third input shaft and said third output shaft.

At least one mechanism of said third plurality of mechanisms can be an electromechanical device configured to receive a signal from the logic control unit U to vary said transmission ratio.

Accordingly, the logic control unit U can be configured to send a signal to said at least one mechanism of said third plurality of mechanisms to vary said transmission ratio.

In other words, the motion of the third shaft A3 is transmitted via the belt C3 to the third input shaft inside the gearbox 191, and via said third plurality of mechanisms to the third output shaft and finally, via the third mechanical element, from the third output shaft to the drive shaft DS.

Said wind apparatus comprises a motion transmission mechanism for transmitting the motion from said drive shaft DS to at least one respective shaft of an electric energy generator G₁,G₂...G_{N} of a plurality of electric energy generators G₁,G₂...G_{N}.

One or more further bladed devices (such as for example the first bladed device, the further first bladed device, and the second bladed device described above) can be connected to said electric energy generators G₁,G₂...G_{N}.

In the example being described, said plurality of electric energy generators is the same plurality of electric energy generators described above for the other wind systems and said motion transmission mechanism for transmitting the motion from said drive shaft DS to at least one shaft of an electric energy generator G₁,G₂...G_{N} is the same motion transmission mechanism described above for other wind systems.

As already mentioned, with reference to the velocity referred to the blades, said velocity is a vector quantity and is therefore defined by at least three parameters: the modulus or intensity, the direction and the orientation.

Therefore, in description, the terms "module" and "intensity" are used interchangeably.

### Advantages

Advantageously, the wind apparatus object of the invention allows to capture a quantity of kinetic energy associated with an air flow even when the intensity and/or direction of said air flow changes/change rapidly over time.

A further advantage is given by the possibility of shaping and dimensioning said wind apparatus (and consequently each bladed device included in said wind apparatus) on the basis of the site where said wind apparatus is to be positioned.

The present invention has been described for illustrative, but not limitative purposes, according to its preferred embodiments, but it is to be understood that variations and/or modifications can be carried out by a skilled in the art, without departing from the scope thereof, as defined according to enclosed claims.

## Claims

1. Wind apparatus comprising:
- a first wind system (1) comprising:
a first bladed device (11) comprising:
a first guide element (12) defining a first trajectory comprising one or more segments, each of which is delimited by a first end point and a second end point,
a first slider (13) sliding on said first guide element (12) in a first direction and in a second direction, opposite to said first direction,
at least one first blade (14) orientable in space with respect to a direction of an air flow and constrained to said first slider (13) in such a way that, when said air flow incides on said first blade (14), said air flow moves said first blade (14) and the movement of said first blade (14) causes the movement of said first slider (13) along said first guide element (12) in said first direction or in said second direction,
first blade rotation means (15) for rotating said first blade (14) in space with respect to said first slider (13), so as to change an angle between said first blade (14) and the direction of said air flow,
**characterised by**:
at least one first position sensor (PS1) for detecting the position of said first blade (14),
- storage means (SM) in which the following data are stored:
the position of each end point of each segment of said first trajectory,
for each end point of each segment of said first trajectory a plurality of predetermined distances between said first slider (13) and said end point, wherein each predetermined distance of said plurality of predetermined distances is associated with a respective predetermined velocity of said first blade (14), with a respective predetermined orientation of said first blade (14) and with a respective predetermined orientation of a segment of said first trajectory;
- a logic control unit (U) configured to:
**∘** acquire over time a plurality of positions of said first slider (13), through said first position sensor (PS1),
o calculate:
a first position difference between a position of said first slider (13) acquired in a time instant *tⱼ*, with j=1,2...N, wherein N is a positive integer, and a position acquired in a previous time instant *t*_{*j*-1},
a time difference between said time instant *tⱼ* and said previous time instant *t*_{*j*-1},
a second position difference between the position of an end point of a segment of said first trajectory towards which said first blade (14) moves, wherein said position is stored in said storage means (SM), and the position of said first slider (13),
the velocity of said first blade (14) with a module equal to the ratio between said first position difference and said time difference, and
the distance of said first blade (14) with respect to said end point of said segment of said first trajectory equal to the result of said second position difference,
o when said distance is equal to a predetermined distance of said plurality of predetermined distances, send a signal to said first blade rotation means (15) for rotating said first blade (14) in such a way that said first blade (14) has an orientation equal to a stored predetermined orientation which is selected on the basis of the correspondence between the distance of said first slider (13) from an end point of said segment of said first trajectory and a predetermined distance stored and the correspondence between the calculated velocity of said first blade and a stored predetermined velocity of said first blade, so that the aerodynamic behaviour of said first bladed device (11) changes over time to maximize the amount of kinetic energy of said air flow captured by said first blade (14).

2. Wind apparatus according to the previous claim, wherein
said first bladed device (11) comprises first guide rotation means (17) for rotating said first guide element (12) in space,
wherein
said logic control unit (U) is configured to send a signal to said first rotation means (17) for rotating said first guide element (12) in such a way that said first guide element (12) has an orientation equal to a stored predetermined orientation which is selected on the basis of the correspondence between the distance of said first slider (13) from an end point of said segment of said first trajectory and a stored predetermined distance and the correspondence between the calculated velocity of said first blade and a stored predetermined velocity of said first blade, so that the aerodynamic behaviour of said first bladed device (11) changes over time to further maximize the amount of kinetic energy of said air flow captured by said first blade (14).

3. Wind apparatus according to claim 1 or 2, wherein
said first wind system (1) comprises:
- at least one first velocity sensor (VS1) for detecting the velocity of the air flow incident on said first blade (14),
- at least one first force sensor (FS1) for detecting a force acting on said first blade (14);
wherein
the following data are stored in said storage means (SM):
a plurality of predetermined air flow velocities, and
a plurality of predetermined forces, wherein each predetermined force of said plurality of predetermined forces is associated with a respective predetermined air flow velocity of said plurality of predetermined air flow velocities, a respective predetermined velocity of said first slider (13), a respective predetermined orientation of said first blade (14) and a respective predetermined orientation of said segment of said first trajectory on which said first blade (14) moves to reach an end point,
wherein
said logic control unit (U) is configured to:
o acquire a plurality of velocities of the air flow over time, through said first velocity sensor (VS1),
o acquire a plurality of forces acting on said first blade (14) over time, through said first force sensor (FS1),
o compare
the velocity of the air flow detected through said first velocity sensor (VS1) with each predetermined air flow velocity stored in said storage means (SM), and
the velocity of said first blade (14) with each predetermined velocity of said first blade stored in said storage means (SM),
to obtain a predetermined force selected on the basis of the correspondence between the acquired air flow velocity and a stored predetermined air flow velocity and of the correspondence between the calculated velocity of said first blade and a stored predetermined velocity of said first blade,
o compare each acquired force with said predetermined force,
o if an acquired force is less than said predetermined force, send a signal to said first blade rotation means (15) to rotate said first blade (14) in such a way that said first blade (14) has an orientation equal to a stored predetermined orientation which is selected on the basis of said predetermined force.

4. Wind apparatus according to claim 2 and claim 3, wherein said logic control unit (U) is configured to send a signal to said first guide rotation means (17) to rotate said first guide element (12) so that said first guide element (12) has an orientation equal to a stored predetermined orientation which is selected on the basis of the correspondence between the acquired air flow velocity and a stored predetermined air flow velocity and the correspondence between the calculated velocity of said first blade and a stored predetermined velocity of said first blade.

5. Wind apparatus according to any one of the previous claims, wherein said first wind system (1) comprises:
- a first motion transmission mechanism comprising:
at least one a first rotating element (181) connected to said first slider (13) in such a way that the movement of said first slider (13), due to the movement of said first blade (14) in said first direction or in said second direction, causes respectively the rotation of said first rotating element (181) in a first direction or in a second direction,
a first shaft (A1) having a rotation axis (A11) and configured to rotate around said rotation axis (A11) in a predetermined direction,
first connecting means (P11, P12, 18A, C12) for connecting said first rotating element (181) to said first shaft (A1), in such a way that the rotation of said first rotating element (181) in said first direction causes the rotation of said first shaft (A1) in said predetermined direction or that the rotation of said first rotating element (181) in said first direction and in said second direction causes the rotation of said first shaft (A1) in said predetermined direction,
wherein
said first wind system (1) is configured to transfer said amount of kinetic energy to said first shaft (A1), so that the kinetic energy of the air flow is transformed in rotation mechanical energy of said first shaft (A1).

6. Wind apparatus according the previous claim, wherein
said wind apparatus comprises:
- a drive shaft (DS),
- a motion transmission mechanism for transmitting the motion to said drive shaft (DS) comprising:
connecting means (180, C1) for connecting said first shaft (A1) to said drive shaft (DS), so that the rotation of said first shaft (A1) causes the rotation of said drive shaft (DS).

7. Wind apparatus according to the previous claim, wherein
said wind apparatus comprises:
- a plurality of electric energy generators (G₁,G₂...G_{N}) to generate electric energy, wherein each electric energy generator of said plurality of electric energy comprises a respective shaft and one or more shafts of respective electric energy generators (G₁,G₂...G_{N}) of said plurality of electric energy generators (G₁,G₂...G_{N}) are connected to said drive shaft (DS),
- a motion transmission mechanism for transmitting motion from said drive shaft (DS) to at least one respective shaft of an electric energy generator (G₁,G₂...G_{N}), comprising:
connecting means (192) for connecting/disconnecting said drive shaft (DS) to/from one or more respective shafts of electric energy generators (G₁,G₂...G_{N1}) of said plurality of electric energy generators (G₁,G₂...G_{N}),
wherein
the following data are stored in said storage means (SM):
a plurality of predetermined power values,
a respective predetermined number of electric energy generators is associated with each predetermined power value of said plurality of predetermined power values,
wherein
said logic control unit (U) is configured to:
o calculate a power value starting from the force acquired through said first force sensor (FS1) and from the calculated velocity of said first blade and from the number of said one or more electric energy generators (G₁,G₂...G_{N}) connected to said drive shaft (DS),
o compare said power value with each predetermined power value to determine the predetermined number of electric energy generators associated with said predetermined power value,
o compare the number of electric energy generators (G₁,G₂...G_{N}) connected to said drive shaft (DS) with said predetermined number of electric energy generators,
o if the number of electric energy generators (G₁,G₂...G_{N}) connected to said drive shaft (DS) is less than said predetermined number of electric energy generators,
calculate a difference between said predetermined number of electric energy generators and said number of electric energy generators and the result of said difference is the number of electric energy generators (G₁,G₂...G_{N}) to be connected to said drive shaft (DS), and
send a control signal to said connecting means (192) containing an information concerning the result of said difference to connect a respective number of electric energy generators (G₁,G₂...G_{N}) to said drive shaft (DS),
o if the number of electric energy generators (G₁,G₂...G_{N}) connected to said drive shaft (DS) is greater than said predetermined number of electric energy generators,
calculate a difference between said number of electric energy generators (G₁,G₂...G_{N}) and said predetermined number of electric energy generators and the result of said difference is the number of electric energy generators (G₁,G₂...G_{N}) to be disconnected from said drive shaft (DS), and
send a control signal to said connecting means (192) containing an information concerning the result of said difference to disconnect a respective number of electric energy generators (G₁,G₂...G_{N}) from said drive shaft (DS).

8. Wind apparatus according to any one of the previous claims, wherein said first wind system (1) comprises a further first bladed device (11'), wherein
said further first bladed device (11') comprises:
a further first guide element (12') defining a further first trajectory comprising one or more segments, each of which is delimited by a first end point and a second end point,
a further first slider (13') sliding on said further first guide element (12') in a first direction and in a second direction, opposite to said first direction, at least one a further first blade (14') orientable in space with respect to a direction of said air flow and constrained to said further first slider (13') in such a way that, when said air flow incides on said further first blade (14'), the movement of said further first blade (14') causes the movement of said further first slider (13') along said further first guide element (12') in said first direction or in said second direction,
further first blade rotation means (15') for rotating said further first blade (14') in space with respect to said further first slider (13'),
wherein
said first wind system (1) comprises:
a further first position sensor (PS1') for detecting the position of said further first blade (14'),
wherein
the following data are further stored in said storage means (SM):
the position of each end point of each segment of said further first trajectory, for each end point of each segment of said further first trajectory a plurality of predetermined distances between said further first slider (13') and said end point, wherein each predetermined distance of said plurality of predetermined distances is associated with a respective predetermined velocity of said further first blade (14'), with a respective predetermined orientation of said further first blade (14') and with a respective predetermined orientation of a segment of said further first trajectory,
wherein
said logic control unit (U) is configured to:
o acquire over time a plurality of positions of said further first slider (13'), through said further first position sensor (PS1'),
o calculate:
a first position difference between a position of said further first slider (13') acquired in time instant *tⱼ*, with j=1,2...N, wherein N is a positive integer, and a position acquired in a previous time instant *t*_{*j*-1},
a time difference between said time instant *tⱼ* and said previous time instant *t*_{*j*-1},
a second position difference between the position of an end point of a segment of said further first trajectory towards said further first blade (14') moves, wherein said position is stored in said storage means (SM), and the position of said further first slider (13'),
the velocity of said further first blade (14') with a module equal to the ratio between said first position difference and said time difference, and
the distance of said further first blade (14') with respect to said end point of said segment of said further first trajectory equal to the result of said second position difference,
o when said distance is equal to a predetermined distance of said plurality of predetermined distances, send a signal to said further first blade rotation means (15') for rotating said further first blade (14') in such a way that said further first blade (14') has an orientation equal to a stored predetermined orientation which is selected on the basis of the correspondence between the distance of said further first slider (13') from an end point of said segment of said further first trajectory and a stored predetermined distance and on the correspondence between the calculated velocity of said further first blade and a stored predetermined velocity of said further first blade, so that the aerodynamic behaviour of said further first bladed device (11') changes over time to maximize the amount of kinetic energy of said air flow captured by said further first blade (14').

9. Wind apparatus according to the previous claim, wherein
said further first bladed device (11') comprises further first guide rotation means (17') for rotating said further first guide element (12') in space, and
wherein
said logic control unit (U) is configured to send a signal to said further first guide rotation means (17') for rotating said further first guide element (12') in such a way that said further first guide element (12') has an orientation equal to a stored predetermined orientation which is selected on the basis of the correspondence between the distance of said further first slider (13') from an end point of said segment of said further first trajectory and a stored predetermined distance and on the correspondence between the calculated velocity of said further first blade and a stored predetermined velocity of said further first blade, so that the aerodynamic behaviour of said further first bladed device (11') changes over time to further maximize the amount of kinetic energy of said air flow captured by said further first bladed (14').

10. Wind apparatus according to claim 8 or 9, wherein said first motion transmission mechanism comprises:
at least one further first rotating element (181') connected to said further first slider (13') of said further first bladed device (11') in such a way that the movement of said further first slider (13'), due to the movement of said further first blade (14') in said first direction or in said second direction, causes respectively the rotation of said further first rotating element (181') in a first direction or in a second direction,
further first connecting means (P11', P12', 18A', C12') for connecting said further first rotating element (181') to said first shaft (A1), in such a way that the rotation of said further first rotating element (181') in said first direction causes the rotation of said first shaft (A1) in said predetermined direction or that the rotation of said further first rotating element (181') in said first direction and in said second direction causes the rotation of said first shaft (A1) in said predetermined direction,
wherein
said first wind system (1) is configured to transfer said amount of kinetic energy to said first shaft (A1), so that the kinetic energy of the air flow is transformed in rotational mechanical energy of said first shaft (A1).

11. Wind apparatus according to any one of claims 8 - 10, wherein
said motion transmission mechanism further comprises:
connecting means (R11, R12, CR, R21, R22) for connecting the first bladed device (11) to the further first bladed device (11') in such a way that, when the first slider (13) of the first bladed device (11) moves in said first direction/second direction, the further first slider (13') of the further first bladed device (11') moves in said second direction/first direction,
wherein
said logic control unit (U) is configured to send a signal to said further first blade rotation means (15') for rotating said further first blade (14') when the distance of said further first bladed (14') with respect to said end point of said segment of said further first trajectory is equal to a stored predetermined distance.

12. Wind apparatus according to claim 9 and the claim 11, wherein said logic control unit (U) is configured to send a signal to said further first guide rotation means (17') for rotating said further first guide element (12'), when the distance of said further first blade (14') with respect to said end point of said segment of said further first trajectory is equal to a stored predetermined distance.

13. Wind apparatus according to any one of the previous claims, wherein said wind apparatus comprises a second wind system (2) comprising a second bladed device (21), wherein
said second bladed device (21) comprises:
a second guide element (22) defining a second trajectory comprising one or more segments, each of which is delimited by a first end point and a second end point,
a second slider (23) sliding on said second guide element (22) in a first direction and in second direction, opposite said first direction,
at least one second blade (24) orientable in space with respect to a direction of an air flow and constrained to said second slider (23) in such a way that, when said air flow incides on said second blade (24), said air flow moves said second blade (24) and the movement of said second blade (24) causes the movement of said second slider (23) along said second guide element (22) in said first direction or in said second direction,
second blade rotation means (25) for rotating said second blade (24) in space with respect to said second slider (23),
wherein
said second wind system (2) comprises:
a second position sensor (PS2) for detecting the position of said second blade (24),
wherein
the following data are stored in said storage means (SM):
the position of each end point of each segment of said second trajectory, for each end point of each segment of said second trajectory a plurality of predetermined distances between said second slider (23) and said end point, wherein each predetermined distance of said plurality of predetermined distances is associated with a respective predetermined velocity of said second bladed (24), a respective predetermined orientation of said second bladed (24) and a respective predetermined orientation of a segment of said second trajectory;
wherein
said logic control unit (U) is configured to:
o acquire over time a plurality of positions of said second slider (23), through said second position sensor (PS2),
o calculate:
a first position difference between a position of said second slider (23) acquired in a time instant *tⱼ*, with j=1,2...N, wherein N is a positive integer, and a position acquired in a previous time instant *t*_{*j*-1},
a time difference between said time instant *tⱼ* and said previous time instant *t*_{*j*-1},
a second position difference between the position of an end point of a segment of said second trajectory towards which the second blade (24) moves, wherein said position is stored in said storage means (SM), and the position of said second slider (23),
the velocity of said second blade (24) with a module equal to the ratio between said first position difference and said time difference, and
the distance of said second blade (24) with respect to said end point of said segment of said second trajectory equal to the result of said second position difference,
o when said distance is equal to a predetermined distance of said plurality of predetermined distances, send a signal to said second blade rotation means (25) for rotating said second blade (24) in such a way that said second blade (24) has an orientation equal to a stored predetermined orientation which is selected on the basis of the correspondence between the distance of said second slider (23) from an end point of said segment of said second trajectory and a stored predetermined distance and on the correspondence between the calculated velocity of said second blade and a stored predetermined velocity of said second blade, so that the aerodynamic behaviour of said second bladed device (21) changes over time to maximize the amount of kinetic energy of said air flow captured by said second blade (24).

14. Wind apparatus according the previous claim, wherein
said second bladed device (21) comprises second guide rotation means (27) for rotating said second guide element (22) in space,
wherein
said logic control unit (U) is configured to send a signal to said second guide rotation means (27) for rotating said second guide element (22) in such a way that said second guide element (22) has an orientation equal to a stored predetermined orientation which is selected on the basis of the correspondence between the distance of said second slider (23) from an end point of said segment of said second trajectory and a stored predetermined distance and on the correspondence between the calculated velocity of said second blade and a stored predetermined velocity of said second blade, so that the aerodynamic behaviour of said second bladed device (21) changes over time to further maximize the amount of kinetic energy of said air flow captured by said second blade (24).

15. Wind apparatus according the claim 13 or 14, wherein said second wind system (2) comprises:
- at least one second velocity sensor (VS2) for detecting the velocity of the air flow incident on said second blade (24),
- at least one second force sensor (FS2) for detecting a force acting on said second blade (24);
wherein
the following data are stored in said storage means (SM):
a plurality of predetermined air flow velocities,
a plurality of predetermined forces, wherein each of predetermined force of said plurality of predetermined forces is associated with a respective predetermined air flow velocity of said plurality of predetermined air flow velocities, a respective predetermined velocity of said second slider (23), a respective predetermined orientation of said second blade (24) and a respective predetermined orientation of said segment of said second trajectory on which said second blade (24) moves to reach an end point,
wherein
said logic control unit (U) is configured to:
acquire a plurality of air flow velocities over time, through said second velocity sensor (VS2),
∘ acquire a plurality of forces acting on said second blade (24) over time, through said second force sensor (FS2),
∘ compare
the velocity of the air flow detected through said second velocity sensor (VS2) with each stored predetermined air flow velocity in said storage means (SM), and
the velocity of said second blade (24) with each predetermined velocity of said second blade stored in said storage means (SM),
to obtain a predetermined force selected on the basis of the correspondence between the acquired air flow velocity and a stored predetermined air flow velocity and of the correspondence between the calculated velocity of said second blade and a stored predetermined velocity of said second blade,
o compare each acquired force with said predetermined force, if an acquired force is less than said predetermined force, send a signal to said second blade rotation means (25) for rotating said second blade (24) in such a way that said second blade (24) has an orientation equal to a stored predetermined orientation which is selected on the basis of said predetermined force.

16. Wind apparatus according to the claim 20 and the claim 15, wherein said logic control unit (U) is configured to send a signal to said guide rotation means (27) for rotating said second guide element (22) in such a way that said second guide element (22) has an orientation equal to a stored predetermined orientation which is selected on the basis of the correspondence between the acquired air flow velocity and a stored predetermined air flow and on the correspondence between the calculated velocity of said second blade and a stored predetermined velocity of said second blade.

17. Wind apparatus according to any one of claims 13 - 16, wherein said second wind system (2) comprises:
- a second motion transmission mechanism comprising:
at least one second rotating element (182) connected to said second slider (23) in such a way that the movement of said second slider (23), due to the movement of said second blade (24) in said first direction or in said second direction, causes respectively the rotation of said second rotating element (182) in a fist direction or in a second direction,
a second shaft (A2) having a rotation axis (A22) and configured to rotate around said rotation axis (A22) in a predetermined direction,
second connecting means (28A, P21, P22, C21) for connecting said second rotating element (182) to said second shaft (A2), in such a way that the rotation of said second rotating element (182) in said first direction causes the rotation of said second shaft (A2) in said predetermined direction or that the rotation of said second rotating element (182) in said first direction and said second direction causes the rotation of said second shaft (A2) in said predetermined direction,
wherein
said second wind system (2) is configured to transfer said amount of kinetic energy to said second shaft (A2), so that the kinetic energy of the air flow is transformed in rotational mechanical energy of said second shaft (A2).

18. Wind apparatus according to claim 6 and claim 17, wherein said motion transmission mechanism for transmitting the motion from said drive shaft (DS) comprises connecting means (1800, C2) for connecting said second shaft (A2) to said drive shaft (DS), so that the rotation of said first shaft (A1) and the rotation of said second shaft (A2) cause the rotation of said drive shaft (DS).

19. Wind apparatus according to any one of the previous claims, wherein said wind apparatus comprises a third wind system (3) and said third wind system (3) comprises:
a third bladed device (31) comprises:
a third guide element (32) having a curvilinear or substantial curvilinear shape defining a third trajectory comprising a plurality of segments, wherein each segment of said plurality of segments is delimited by a first end point and a second end point,
a third slider (33) sliding on said third guide element (32) in a first direction and in a second direction, opposite to said first direction,
at least one third blade (34) orientable in space with respect to a direction of an air flow and constrained to said third slider (33) in such a way that, when said air flow incides on said third blade (34), said air flow moves said third blade (34) and the movement of said third blade (34) causes the movement of said third slider (33) along said third guide element (32) in said first direction or in said second direction,
third blade rotation means (35) for rotating said third blade (34) in space with respect to said third slider (33),
wherein
said third wind system (3) comprises:
at least one third position sensor (PS3) for detecting the position of said third blade (34),
wherein
the following data are stored in said storage means (SM):
the position of each end point of each segment of said third trajectory,
for each end point of each segment of said third trajectory a plurality of predetermined distances between said third slider (33) and said end point, wherein each predetermined distance of said plurality of predetermined distances is associated with a respective predetermined velocity of said third blade (34), and a respective predetermined orientation of said third blade (34),
wherein
said logic control unit (U) is configured to:
o acquire a plurality of position values associated with said third slider (33) over time, through said third position sensor (PS3),
o calculate:
a first position difference between a position of said third slider (33) acquired in a time instant *tⱼ*, with j=1,2...N, wherein N is a positive integer, and a position acquired in a previous time instant *t*_{*j*-1},
a time difference between said time instant *tⱼ* and said previous time instant *t*_{*j*-1},
a second position difference between the position of an end point of a segment of said third trajectory towards which the third blade (34) moves, wherein said position is stored in said storage means (SM), and the position of said third slider (33),
the velocity of said third blade (34) with a module equal to the ratio between said first position difference and said time difference, and
the distance of said third blade (34) with respect to said end point of said segment of said third trajectory equal to the result of said second position difference,
o when said distance is equal to a predetermined distance of said plurality of predetermined distances, send a signal to said third blade rotation means (35) for rotating said third blade (34) in such a way that said third blade (34) has an orientation equal to a stored predetermined orientation which is selected on the basis of the correspondence between the distance of said third slider (33) from an end point of said segment of said third trajectory and a stored predetermined distance and on the basis of the calculated velocity of said third blade and a stored predetermined velocity of said third blade, so that the aerodynamic behaviour of said third bladed device (31) changes over time to maximize the amount of kinetic energy of said air flow captured by said third blade (34).

20. Wind apparatus according the previous claim, wherein
said third wind system (3) comprises:
- at least one third velocity sensor (VS3) for detecting the velocity of the air flow incident on said third blade (34),
- at least one third force sensor (FS3) for detecting a force acting on said third blade (34);
wherein
the following data are stored in said storage means (SM):
a plurality of predetermined air flow velocities,
a plurality of predetermined forces, wherein each predetermined force of said predetermined forces is associated with a respective predetermined air flow velocity of said predetermined air flow velocities, a respective predetermined velocity of said third slider (33), a respective predetermined orientation of said third blade (34),
wherein
said logic control unit (U) is configured to:
o acquire a plurality of air flow velocities over time, through said third velocity sensor (VS3),
o acquire a plurality of forces acting on said third blade (34) over time, through said third force sensor (FS3),
o compare
the velocity of the air flow detected through said third velocity sensor (VS3) with each predetermined air flow velocity stored in said storage means (SM), and
the velocity of said third blade (34) with each predetermined velocity of said third blade stored in said storage means (SM),
to obtain a predetermined force selected on the basis of the correspondence between the acquired air flow velocity and a stored predetermined air flow velocity and on the correspondence between the calculated velocity of said third blade and a stored predetermined velocity of said third blade,
o compare each acquired force with said predetermined force, if an acquired force is less than said predetermined force, send a signal to said blade rotation means (35) for rotating said third blade (34) in such a way that said third blade (34) has an orientation equal to a stored predetermined orientation which is selected on the basis of said predetermined force.

21. Wind apparatus according to the claim 19 or 20, wherein said third wind system (3) comprises:
- a third motion transmission mechanism comprising:
at least one third rotating element (183) connected to said third slider (33) in such a way that the movement of said third slider (33), due to the movement of said third blade (34) in said first direction or in said second direction, causes respectively the rotation of said third rotating element (183) in a first direction or in a second direction,
a third shaft (A3) having a rotation axis (A33) and configured to rotate around said rotation axis (A33) in a predetermined direction,
third connecting means (38A, P31, P32, C31) for connecting said third rotating element (183) and said third shaft (A3), in such a way that the rotation of said third rotating element (183) in said first direction and in said second direction causes the rotation of said third shaft (A3) in said predetermined direction,
wherein
said third wind system (3) is configured to transfer said amount of kinetic energy to said third shaft (A3), so that the kinetic energy of the air flow is transformed in rotational mechanical energy of said third shaft (A3).

22. Wind apparatus according to any one of claims 19-21, wherein said motion transmission mechanism for transmitting the motion to said drive shaft (DS) comprises connecting means (18000, C3) for connecting said third shaft (A3) to said drive shaft (DS), so that the rotation of said first shaft (A1), of said second shaft (A2) and of said third shaft (A3) cause the rotation of said drive shaft (DS).

## Patentansprüche

1. Windvorrichtung, umfassend:
- ein erstes Windsystem (1) mit: eine erste Schaufelvorrichtung (11) mit: ein erstes Führungselement (12), das eine erste Flugbahn definiert, die ein oder mehrere Segmente umfasst, von denen jedes durch einen ersten Endpunkt und einen zweiten Endpunkt begrenzt ist ein erstes Gleitelement (13), das auf dem ersten Führungselement (12) in einer ersten Richtung und in einer zweiten Richtung, die der ersten Richtung entgegengesetzt ist, gleitet, mindestens eine erste Schaufel (14), die im Raum in Bezug auf eine Richtung eines Luftstroms ausrichtbar ist und an dem ersten Gleitelement (13) so befestigt ist, dass, wenn der Luftstrom auf die erste Schaufel (14) trifft die Luftströmung die erste Schaufel (14) bewegt und die Bewegung der ersten Schaufel (14) die Bewegung des ersten Gleiters (13) entlang des ersten Führungselements (12) in der ersten Richtung oder in der zweiten Richtung bewirkt, eine erste Schaufeldreheinrichtung (15) zum Drehen der ersten Schaufel (14) im Raum in Bezug auf den ersten Gleiter (13), um einen Winkel zwischen der ersten Schaufel (14) und der Richtung der Luftströmung zu ändern, **gekennzeichnet durch**: mindestens einen ersten Positionssensor (PS1) zum Erfassen der Position der ersten Lamelle (14),
- Speichermittel (SM), in denen die folgenden Daten gespeichert werden: die Position jedes Endpunkts jedes Segments der ersten Trajektorie; für jeden Endpunkt jedes Segments der ersten Trajektorie eine Vielzahl vorbestimmter Abstände zwischen dem ersten Schieber (13) und dem Endpunkt, wobei jeder vorbestimmte Abstand der Vielzahl vorbestimmter Abstände mit einer jeweiligen vorbestimmten Geschwindigkeit der ersten Schaufel (14), mit einer jeweiligen vorbestimmten Ausrichtung der ersten Schaufel (14) und mit einer jeweiligen vorbestimmten Ausrichtung eines Segments der ersten Trajektorie verbunden ist:
- eine logische Steuereinheit (U), die konfiguriert ist, um:
o im Laufe der Zeit eine Vielzahl von Positionen des ersten Schiebers (13) über den ersten Positionssensor (PS1) zu erfassen,
o berechnen: eine erste Positionsdifferenz zwischen einer Position des ersten Läufers (13), die in einem Zeitpunkt *tⱼ* erfasst wurde, wobei j=1,2...N, wobei N eine positive ganze Zahl ist, und einer Position, die in einem vorhergehenden Zeitpunkt *t*_{*j*-1} erfasst wurde, eine Zeitdifferenz zwischen dem Zeitpunkt *tⱼ* und dem vorhergehenden Zeitpunkt *t*_{*j*-1}, eine zweite Positionsdifferenz zwischen der Position eines Endpunkts eines Segments der ersten Trajektorie, zu der sich das erste Blatt (14) bewegt, wobei die Position in der Speichereinrichtung (SM) gespeichert ist, und der Position des ersten Schiebers (13), die Geschwindigkeit des ersten Schiebers (14) mit einem Modul, das gleich dem Verhältnis zwischen der ersten Positionsdifferenz und der Zeitdifferenz ist, und der Abstand des ersten Schiebers (14) in Bezug auf den Endpunkt des Segments der ersten Trajektorie gleich dem Ergebnis der zweiten Positionsdifferenz,
o wenn der Abstand gleich einem vorbestimmten Abstand der mehreren vorbestimmten Abstände ist, ein Signal an die erste Schaufelrotationseinrichtung (15) zum Drehen der ersten Schaufel (14) in einer solchen Weise zu senden, dass die erste Schaufel (14) eine Ausrichtung hat, die gleich einer gespeicherten vorbestimmten Ausrichtung ist, die auf der Grundlage der Übereinstimmung zwischen dem Abstand des ersten Schiebers (13) von einem Endpunkt des Segments der ersten Trajektorie und einem gespeicherten vorbestimmten Abstand und der Übereinstimmung zwischen der berechneten Geschwindigkeit der ersten Schaufel und einer gespeicherten vorbestimmten Geschwindigkeit der ersten Schaufel ausgewählt wird, so dass sich das aerodynamische Verhalten der ersten Schaufelvorrichtung (11) im Laufe der Zeit ändert, um die Menge an kinetischer Energie des Luftstroms, die von der ersten Schaufel (14) eingefangen wird, zu maximieren.

2. Windvorrichtung nach dem vorhergehenden Anspruch, wobei die erste Schaufelvorrichtung (11) eine erste Führungsdrehvorrichtung (17) zum Drehen des ersten Führungselements (12) im Raum umfasst, wobei die logische Steuereinheit (U) so konfiguriert ist, dass sie ein Signal an die erste Rotationseinrichtung (17) sendet, um das erste Führungselement (12) so zu drehen, dass das erste Führungselement (12) eine Ausrichtung hat, die gleich einer gespeicherten vorbestimmten Ausrichtung ist, die auf der Grundlage der Übereinstimmung zwischen dem Abstand des ersten Gleiters (13) von einem Endpunkt des Segments der ersten Flugbahn und einem gespeicherten vorbestimmten Abstand und der Übereinstimmung zwischen der berechneten Geschwindigkeit des ersten Flügels und einer gespeicherten vorbestimmten Geschwindigkeit des ersten Flügels ausgewählt wird, so dass sich das aerodynamische Verhalten der ersten Schaufelvorrichtung (11) im Laufe der Zeit ändert, um die Menge an kinetischer Energie des Luftstroms, die von der ersten Schaufel (14) eingefangen wird, weiter zu maximieren.

3. Windvorrichtung nach Anspruch 1 oder 2, wobei das erste Windsystem (1) umfasst:
- mindestens einen ersten Geschwindigkeitssensor (VS1) zur Erfassung der Geschwindigkeit des auf das erste Blatt (14) auftreffenden Luftstroms,
- mindestens einen ersten Kraftsensor (FS1) zum Erfassen einer auf das erste Blatt (14) wirkenden Kraft; wobei die folgenden Daten in dem Speichermittel (SM) gespeichert werden: eine Vielzahl von vorbestimmten Luftströmungsgeschwindigkeiten, und eine Vielzahl von vorbestimmten Kräften, wobei jede vorbestimmte Kraft der Vielzahl von vorbestimmten Kräften mit einer jeweiligen vorbestimmten Luftströmungsgeschwindigkeit der Vielzahl von vorbestimmten Luftströmungsgeschwindigkeiten, einer jeweiligen vorbestimmten Geschwindigkeit des ersten Schiebers (13), einer jeweiligen vorbestimmten Ausrichtung der ersten Schaufel (14) und einer jeweiligen vorbestimmten Ausrichtung des Segments der ersten Bahn, auf der sich die erste Schaufel (14) bewegt, um einen Endpunkt zu erreichen, verbunden ist, wobei die logische Steuereinheit (U) konfiguriert ist, um:
o eine Vielzahl von Geschwindigkeiten des Luftstroms über die Zeit durch den ersten Geschwindigkeitssensor (VS1) zu erfassen,
o Erfassen einer Vielzahl von Kräften, die über die Zeit auf die erste Schaufel (14) wirken, durch den ersten Kraftsensor (FS1),
o Vergleichen der Geschwindigkeit des Luftstroms, der durch den ersten Geschwindigkeitssensor (VS1) erfasst wird, mit jeder vorbestimmten Luftstromgeschwindigkeit, die in der Speichereinrichtung (SM) gespeichert ist, und die Geschwindigkeit der ersten Lamelle (14) mit jeder vorbestimmten Geschwindigkeit der ersten Lamelle, die in der Speichereinrichtung (SM) gespeichert ist, um eine vorbestimmte Kraft zu erhalten, die auf der Grundlage der Übereinstimmung zwischen der erfassten Luftströmungsgeschwindigkeit und einer gespeicherten vorbestimmten Luftströmungsgeschwindigkeit und der Übereinstimmung zwischen der berechneten Geschwindigkeit der ersten Schaufel und einer gespeicherten vorbestimmten Geschwindigkeit der ersten Schaufel ausgewählt wird,
o jede erfasste Kraft mit der vorbestimmten Kraft zu vergleichen,
o wenn eine erfasste Kraft kleiner als die vorbestimmte Kraft ist, ein Signal an die erste Schaufeldreheinrichtung (15) zu senden, um die erste Schaufel (14) so zu drehen, dass die erste Schaufel (14) eine Ausrichtung hat, die gleich einer gespeicherten vorbestimmten Ausrichtung ist, die auf der Grundlage der vorbestimmten Kraft ausgewählt wird.

4. Windvorrichtung nach Anspruch 2 und Anspruch 3, wobei die logische Steuereinheit (U) so konfiguriert ist, dass sie ein Signal an die erste Führungsdrehvorrichtung (17) sendet, um das erste Führungselement (12) so zu drehen, dass das erste Führungselement (12) eine Ausrichtung hat, die gleich einer gespeicherten vorbestimmten Ausrichtung ist, die auf der Grundlage der Übereinstimmung zwischen der erfassten Luftströmungsgeschwindigkeit und einer gespeicherten vorbestimmten Luftströmungsgeschwindigkeit und der Übereinstimmung zwischen der berechneten Geschwindigkeit des ersten Blattes und einer gespeicherten vorbestimmten Geschwindigkeit des ersten Blattes ausgewählt wird.

5. Windvorrichtung nach einem der vorhergehenden Ansprüche, wobei das erste Windsystem (1) umfasst:
- einen ersten Bewegungsübertragungsmechanismus, umfassend: mindestens ein erstes Drehelement (181), das mit dem ersten Läufer (13) derart verbunden ist, dass die Bewegung des ersten Läufers (13) aufgrund der Bewegung des ersten Flügels (14) in der ersten Richtung oder in der zweiten Richtung jeweils die Drehung des ersten Drehelements (181) in einer ersten Richtung oder in einer zweiten Richtung bewirkt, eine erste Welle (A1), die eine Drehachse (A11) aufweist und so konfiguriert ist, dass sie sich um die Drehachse (A11) in einer vorbestimmten Richtung dreht, erste Verbindungsmittel (P11, P12, 18A, C12) zum Verbinden des ersten Drehelements (181) mit der ersten Welle (A1), so dass die Drehung des ersten Drehelements (181) in der ersten Richtung die Drehung der ersten Welle (A1) in der vorbestimmten Richtung bewirkt oder dass die Drehung des ersten Drehelements (181) in der ersten Richtung und in der zweiten Richtung die Drehung der ersten Welle (A1) in der vorbestimmten Richtung bewirkt, wobei das erste Windsystem (1) so konfiguriert ist, dass es den Betrag der kinetischen Energie auf die erste Welle (A1) überträgt, so dass die kinetische Energie des Luftstroms in mechanische Rotationsenergie der ersten Welle (A1) umgewandelt wird.

6. Windvorrichtung nach dem vorhergehenden Anspruch, wobei die Windvorrichtung umfasst:
- eine Antriebswelle (DS),
- einen Bewegungsübertragungsmechanismus zum Übertragen der Bewegung auf die Antriebswelle (DS), umfassend: Verbindungsmittel (180, C1) zum Verbinden der ersten Welle (A1) mit der Antriebswelle (DS), so dass die Drehung der ersten Welle (A1) die Drehung der Antriebswelle (DS) bewirkt.

7. Windvorrichtung nach dem vorhergehenden Anspruch, wobei die Windvorrichtung umfasst:
- eine Vielzahl von elektrischen Energiegeneratoren (G₁, G₂...G_{N}) zur Erzeugung von elektrischer Energie, wobei jeder elektrische Energiegenerator der Vielzahl von elektrischen Energiegeneratoren eine entsprechende Welle aufweist und eine oder mehrere Wellen von entsprechenden elektrischen Energiegeneratoren (G₁, G₂...G_{N}) der Vielzahl von elektrischen Energiegeneratoren (G₁,G₂...G_{N}) mit der Antriebswelle (DS) verbunden sind,
- einen Bewegungsübertragungsmechanismus zum Übertragen von Bewegung von der Antriebswelle (DS) auf mindestens eine entsprechende Welle eines elektrischen Energiegenerators (G₁, G₂...G_{N}), umfassend: Verbindungsmittel (192) zum Verbinden/Trennen der Antriebswelle (DS) mit/von einer oder mehreren entsprechenden Wellen von elektrischen Energiegeneratoren (G₁,G₂...G_{N1}) der Vielzahl von elektrischen Energiegeneratoren (G₁,G₂...G_{N}), wobei die folgenden Daten in dem Speichermittel (SM) gespeichert werden: eine Vielzahl von vorbestimmten Leistungswerten, eine jeweilige vorbestimmte Anzahl von elektrischen Energieerzeugern ist mit jedem vorbestimmten Leistungswert der Vielzahl von vorbestimmten Leistungswerten verbunden, wobei die logische Steuereinheit (U) konfiguriert ist, um:
o einen Leistungswert zu berechnen, ausgehend von der durch den ersten Kraftsensor (FS1) erfassten Kraft und von der berechneten Geschwindigkeit des ersten Blattes und aus der Anzahl des einen oder der mehreren elektrischen Energiegeneratoren (G₁,G₂...G_{N}), die mit der Antriebswelle (DS) verbunden sind,
o den Leistungswert mit jedem vorbestimmten Leistungswert zu vergleichen, um die vorbestimmte Anzahl von elektrischen Energieerzeugern zu bestimmen, die mit dem vorbestimmten Leistungswert verbunden sind,
o Vergleichen der Anzahl der mit der Antriebswelle (DS) verbundenen elektrischen Energieerzeuger (G₁,G₂...G_{N}) mit der vorbestimmten Anzahl der elektrischen Energieerzeuger,
o wenn die Anzahl der an die Antriebswelle (DS) angeschlossenen elektrischen Energieerzeuger (G₁,G₂...G_{N}) kleiner ist als die vorgegebene Anzahl der elektrischen Energieerzeuger, eine Differenz zwischen der vorbestimmten Anzahl elektrischer Energieerzeuger und der Anzahl elektrischer Energieerzeuger berechnet wird und das Ergebnis dieser Differenz die Anzahl der elektrischen Energieerzeuger (G₁,G₂...G_{N}) ist, die mit der Antriebswelle (DS) verbunden werden sollen, und Senden eines Steuersignals an die Verbindungseinrichtung (192), das eine Information bezüglich des Ergebnisses der Differenz enthält, um eine entsprechende Anzahl von elektrischen Energieerzeugern (G₁,G₂...G_{N}) mit der Antriebswelle (DS) zu verbinden,
o wenn die Anzahl von elektrischen Energieerzeugern (G₁,G₂...G_{N}), die mit der Antriebswelle (DS) verbunden sind, größer ist als die vorbestimmte Anzahl von elektrischen Energieerzeugern, eine Differenz zwischen der Anzahl elektrischer Energiegeneratoren (G₁,G₂...G_{N}) und der vorbestimmten Anzahl elektrischer Energiegeneratoren zu berechnen und das Ergebnis der Differenz die Anzahl der von der Antriebswelle (DS) zu trennenden elektrischen Energiegeneratoren (G₁,G₂...G_{N}) ist, und ein Steuersignal an die Verbindungseinrichtung (192) zu senden, das eine Information bezüglich des Ergebnisses der Differenz enthält, um eine entsprechende Anzahl elektrischer Energiegeneratoren (G₁,G₂...G_{N}) von der Antriebswelle (DS) zu trennen.

8. Windvorrichtung nach einem der vorhergehenden Ansprüche, wobei das erste Windsystem (1) eine weitere erste beschaufelte Vorrichtung (11') umfasst, wobei die weitere erste beschaufelte Vorrichtung (11') umfasst: ein weiteres erstes Führungselement (12'), das eine weitere erste Trajektorie definiert, die ein oder mehrere Segmente umfasst, von denen jedes durch einen ersten Endpunkt und einen zweiten Endpunkt begrenzt ist, ein weiteres erstes Gleitelement (13'), das auf dem weiteren ersten Führungselement (12') in einer ersten Richtung und in einer zweiten Richtung, die der ersten Richtung entgegengesetzt ist, gleitet, mindestens eine weitere erste Schaufel (14'), die im Raum in Bezug auf eine Richtung des Luftstroms ausrichtbar ist und an dem weiteren ersten Gleitelement (13') so befestigt ist, dass, wenn der Luftstrom auf die weitere erste Schaufel (14') trifft, die Bewegung der weiteren ersten Schaufel (14') die Bewegung des weiteren ersten Gleiters (13') entlang des weiteren ersten Führungselements (12') in der ersten Richtung oder in der zweiten Richtung bewirkt, eine weitere erste Blattdrehvorrichtung (15') zum Drehen des weiteren ersten Blattes (14') im Raum in Bezug auf den weiteren ersten Gleiter (13'), wobei das erste Windsystem (1) umfasst: einen weiteren ersten Positionssensor (PS1') zum Erfassen der Position des weiteren ersten Flügels (14'), wobei die folgenden Daten weiterhin in dem Speichermittel (SM) gespeichert werden: die Position jedes Endpunkts jedes Segments der weiteren ersten Trajektorie, für jeden Endpunkt jedes Segments der weiteren ersten Trajektorie eine Vielzahl vorbestimmter Abstände zwischen dem weiteren ersten Schieber (13') und dem Endpunkt, wobei jeder vorbestimmte Abstand der Vielzahl vorbestimmter Abstände mit einer jeweiligen vorbestimmten Geschwindigkeit der weiteren ersten Klinge (14'), mit einer jeweiligen vorbestimmten Ausrichtung der weiteren ersten Klinge (14') und mit einer jeweiligen vorbestimmten Ausrichtung eines Segments der weiteren ersten Trajektorie verbunden ist, wobei die logische Steuereinheit (U) konfiguriert ist, um:
o über die Zeit eine Vielzahl von Positionen des weiteren ersten Schiebers (13') durch den weiteren ersten Positionssensor (PS1') zu erfassen,
o berechnen: eine erste Positionsdifferenz zwischen einer Position des weiteren ersten Läufers (13'), die im Zeitpunkt *tⱼ* erfasst wurde, wobei j=1,2...N, wobei N eine positive ganze Zahl ist, und einer Position, die in einem vorhergehenden Zeitpunkt *t*_{*j*-1} erfasst wurde, eine Zeitdifferenz zwischen dem Zeitpunkt *tⱼ* und dem vorhergehenden Zeitpunkt *t*_{*j*-1}, eine zweite Positionsdifferenz zwischen der Position eines Endpunkts eines Segments der weiteren ersten Trajektorie, auf die sich das weitere erste Blatt (14') zu bewegt, wobei die Position in der Speichereinrichtung (SM) gespeichert ist, und der Position des weiteren ersten Schiebers (13'), die Geschwindigkeit der weiteren ersten Klinge (14') mit einem Modul, das gleich dem Verhältnis zwischen der ersten Positionsdifferenz und der Zeitdifferenz ist, und der Abstand der weiteren ersten Schaufel (14') in Bezug auf den Endpunkt des Segments der weiteren ersten Flugbahn gleich dem Ergebnis der zweiten Positionsdifferenz ist,
o wenn der Abstand gleich einem vorbestimmten Abstand der mehreren vorbestimmten Abstände ist, Senden eines Signals an die weitere erste Schaufelrotationseinrichtung (15') zum Drehen der weiteren ersten Schaufel (14') in einer solchen Weise, dass die weitere erste Schaufel (14') eine Ausrichtung hat, die gleich einer gespeicherten vorbestimmten Ausrichtung ist, die auf der Grundlage der Übereinstimmung zwischen dem Abstand des weiteren ersten Schiebers (13') von einem Endpunkt des Segments der weiteren ersten Flugbahn und einem gespeicherten vorbestimmten Abstand und auf der Grundlage der Übereinstimmung zwischen der berechneten Geschwindigkeit der weiteren ersten Schaufel und einer gespeicherten vorbestimmten Geschwindigkeit der weiteren ersten Schaufel ausgewählt wird, so dass sich das aerodynamische Verhalten der weiteren ersten Schaufelvorrichtung (11') im Laufe der Zeit ändert, um die Menge an kinetischer Energie des Luftstroms zu maximieren, die von der weiteren ersten Schaufel (14') eingefangen wird.

9. Windvorrichtung nach dem vorhergehenden Anspruch, wobei die weitere erste Schaufelvorrichtung (11') weitere erste Führungsrotationsmittel (17') zum Drehen des weiteren ersten Führungselements (12') im Raum umfasst, und wobei die logische Steuereinheit (U) so konfiguriert ist, dass sie ein Signal an die weiteren ersten Führungsdrehmittel (17') sendet, um das weitere erste Führungselement (12') so zu drehen, dass das weitere erste Führungselement (12') eine Ausrichtung hat, die gleich einer gespeicherten vorbestimmten Ausrichtung ist, die auf der Grundlage der Übereinstimmung zwischen dem Abstand des weiteren ersten Schiebers (13') von einem Endpunkt des Segments der weiteren ersten Flugbahn und einem gespeicherten vorbestimmten Abstand und auf der Grundlage der Übereinstimmung zwischen der berechneten Geschwindigkeit des weiteren ersten Schaufelblatts und einer gespeicherten vorbestimmten Geschwindigkeit des weiteren ersten Schaufelblatts ausgewählt wird, so dass sich das aerodynamische Verhalten der weiteren ersten Schaufelvorrichtung (11') im Laufe der Zeit ändert, um die Menge an kinetischer Energie des Luftstroms, die von der weiteren ersten Schaufel (14') erfasst wird, weiter zu maximieren.

10. Windvorrichtung nach Anspruch 8 oder 9, wobei der erste Bewegungsübertragungsmechanismus umfasst: mindestens ein weiteres erstes Drehelement (181'), das mit dem weiteren ersten Schieber (13') der weiteren ersten Schaufelvorrichtung (11') derart verbunden ist, dass die Bewegung des weiteren ersten Schiebers (13') aufgrund der Bewegung der weiteren ersten Schaufel (14') in der ersten Richtung oder in der zweiten Richtung jeweils die Drehung des weiteren ersten Drehelements (181') in einer ersten Richtung oder in einer zweiten Richtung bewirkt, weitere erste Verbindungsmittel (P11', P12', 18A', C12') zum Verbinden des weiteren ersten Drehelements (181') mit der ersten Welle (A1), derart, dass die Drehung des weiteren ersten Drehelements (181') in der ersten Richtung die Drehung der ersten Welle (A1) in der vorbestimmten Richtung bewirkt oder dass die Drehung des weiteren ersten Drehelements (181') in der ersten Richtung und in der zweiten Richtung die Drehung der ersten Welle (A1) in der vorbestimmten Richtung bewirkt, wobei das erste Windsystem (1) so konfiguriert ist, dass es die Menge an kinetischer Energie auf die erste Welle (A1) überträgt, so dass die kinetische Energie des Luftstroms in mechanische Rotationsenergie der ersten Welle (A1) umgewandelt wird.

11. Windvorrichtung nach einem der Ansprüche 8 bis 10, wobei der Bewegungsübertragungsmechanismus ferner umfasst: Verbindungsmittel (R11, R12, CR, R21, R22) zum Verbinden der ersten beschaufelten Vorrichtung (11) mit der weiteren ersten beschaufelten Vorrichtung (11') auf eine solche Weise, dass, wenn sich der erste Schieber (13) der ersten beschaufelten Vorrichtung (11) in die erste Richtung/zweite Richtung bewegt, sich der weitere erste Schieber (13') der weiteren ersten beschaufelten Vorrichtung (11') in die zweite Richtung/erste Richtung bewegt, wobei die logische Steuereinheit (U) so konfiguriert ist, dass sie ein Signal an die weitere erste Schaufeldreheinrichtung (15') zum Drehen des weiteren ersten Schaufelblatts (14') sendet, wenn der Abstand des weiteren ersten Schaufelblatts (14') in Bezug auf den Endpunkt des Segments der weiteren ersten Trajektorie gleich einem gespeicherten vorbestimmten Abstand ist.

12. Windvorrichtung nach Anspruch 9 und Anspruch 11, wobei die logische Steuereinheit (U) so konfiguriert ist, dass sie ein Signal an die weiteren ersten Führungsdrehmittel (17') zum Drehen des weiteren ersten Führungselements (12') sendet, wenn der Abstand des weiteren ersten Blatts (14') in Bezug auf den Endpunkt des Segments der weiteren ersten Trajektorie gleich einem gespeicherten vorbestimmten Abstand ist.

13. Windvorrichtung nach einem der vorhergehenden Ansprüche, wobei die Windvorrichtung ein zweites Windsystem (2) umfasst, das eine zweite beschaufelte Vorrichtung (21) umfasst, wobei die zweite beschaufelte Vorrichtung (21) umfasst: ein zweites Führungselement (22), das eine zweite Trajektorie definiert, die ein oder mehrere Segmente umfasst, von denen jedes durch einen ersten Endpunkt und einen zweiten Endpunkt begrenzt ist, einen zweiten Schieber (23), der auf dem zweiten Führungselement (22) in einer ersten Richtung und in einer zweiten Richtung, die der ersten Richtung entgegengesetzt ist, gleitet mindestens eine zweite Schaufel (24), die im Raum in Bezug auf eine Richtung eines Luftstroms ausrichtbar ist und an dem zweiten Schieber (23) derart befestigt ist, dass, wenn der Luftstrom auf die zweite Schaufel (24) trifft, der Luftstrom die zweite Schaufel (24) bewegt und die Bewegung der zweiten Schaufel (24) die Bewegung des zweiten Schiebers (23) entlang des zweiten Führungselements (22) in der ersten Richtung oder in der zweiten Richtung bewirkt, eine zweite Blattdrehvorrichtung (25) zum Drehen des zweiten Blattes (24) im Raum in Bezug auf den zweiten Gleiter (23), wobei das zweite Windsystem (2) umfasst: einen zweiten Positionssensor (PS2) zum Erfassen der Position des zweiten Flügels (24), wobei die folgenden Daten in dem Speichermittel (SM) gespeichert werden: die Position jedes Endpunkts jedes Segments der zweiten Trajektorie; für jeden Endpunkt jedes Segments der zweiten Trajektorie eine Vielzahl von vorbestimmten Abständen zwischen dem zweiten Schieber (23) und dem Endpunkt, wobei jeder vorbestimmte Abstand der Vielzahl von vorbestimmten Abständen mit einer jeweiligen vorbestimmten Geschwindigkeit des zweiten Blatts (24), einer jeweiligen vorbestimmten Ausrichtung des zweiten Blatts (24) und einer jeweiligen vorbestimmten Ausrichtung eines Segments der zweiten Trajektorie verbunden ist: wobei die logische Steuereinheit (U) konfiguriert ist, um:
o über die Zeit eine Vielzahl von Positionen des zweiten Schiebers (23) durch den zweiten Positionssensor (PS2) zu erfassen,
o berechnen: eine erste Positionsdifferenz zwischen einer Position des zweiten Läufers (23), die in einem Zeitpunkt *tⱼ* erfasst wurde, wobei j=1,2...N, wobei N eine positive ganze Zahl ist, und einer Position, die in einem vorhergehenden Zeitpunkt *t*_{*j*-1} erfasst wurde, eine Zeitdifferenz zwischen dem Zeitpunkt *tⱼ* und dem vorhergehenden Zeitpunkt *t*_{*j*-1}, eine zweite Positionsdifferenz zwischen der Position eines Endpunkts eines Segments der zweiten Trajektorie, zu der sich das zweite Blatt (24) bewegt, wobei die Position in der Speichereinrichtung (SM) gespeichert ist, und der Position des zweiten Schiebers (23), die Geschwindigkeit des zweiten Messers (24) mit einem Modul, das gleich dem Verhältnis zwischen der ersten Positionsdifferenz und der Zeitdifferenz ist, und der Abstand der zweiten Schaufel (24) in Bezug auf den Endpunkt des Segments der zweiten Flugbahn gleich dem Ergebnis der zweiten Positionsdifferenz ist,
o wenn der Abstand gleich einem vorbestimmten Abstand der mehreren vorbestimmten Abstände ist, ein Signal an die zweite Schaufelrotationseinrichtung (25) zum Drehen der zweiten Schaufel (24) in einer solchen Weise zu senden, dass die zweite Schaufel (24) eine Ausrichtung hat, die gleich einer gespeicherten vorbestimmten Ausrichtung ist, die auf der Grundlage der Übereinstimmung zwischen dem Abstand des zweiten Schiebers (23) von einem Endpunkt des Segments der zweiten Flugbahn und einem gespeicherten vorbestimmten Abstand und auf der Grundlage der Übereinstimmung zwischen der berechneten Geschwindigkeit der zweiten Schaufel und einer gespeicherten vorbestimmten Geschwindigkeit der zweiten Schaufel ausgewählt wird, so dass sich das aerodynamische Verhalten der zweiten Schaufelvorrichtung (21) im Laufe der Zeit ändert, um die Menge an kinetischer Energie des Luftstroms zu maximieren, die von der zweiten Schaufel (24) eingefangen wird.

14. Windvorrichtung nach dem vorhergehenden Anspruch, wobei die zweite Schaufelvorrichtung (21) eine zweite Führungsdrehvorrichtung (27) zum Drehen des zweiten Führungselements (22) im Raum umfasst, wobei die logische Steuereinheit (U) so konfiguriert ist, dass sie ein Signal an die zweite Führungsdreheinrichtung (27) sendet, um das zweite Führungselement (22) so zu drehen, dass das zweite Führungselement (22) eine Ausrichtung hat, die gleich einer gespeicherten vorbestimmten Ausrichtung ist, die auf der Grundlage der Übereinstimmung zwischen dem Abstand des zweiten Gleiters (23) von einem Endpunkt des Segments der zweiten Flugbahn und einem gespeicherten vorbestimmten Abstand und auf der Grundlage der Übereinstimmung zwischen der berechneten Geschwindigkeit des zweiten Flügels und einer gespeicherten vorbestimmten Geschwindigkeit des zweiten Flügels ausgewählt wird, so dass sich das aerodynamische Verhalten der zweiten Schaufelvorrichtung (21) im Laufe der Zeit ändert, um die Menge an kinetischer Energie des Luftstroms, die von der zweiten Schaufel (24) eingefangen wird, weiter zu maximieren.

15. Windvorrichtung nach Anspruch 13 oder 14, wobei das zweite Windsystem (2) umfasst:
- mindestens einen zweiten Geschwindigkeitssensor (VS2) zur Erfassung der Geschwindigkeit des auf das zweite Blatt (24) auftreffenden Luftstroms,
- mindestens einen zweiten Kraftsensor (FS2) zum Erfassen einer auf das zweite Blatt (24) wirkenden Kraft: wobei in den Speichermitteln (SM) die folgenden Daten gespeichert sind: eine Vielzahl von vorbestimmten Luftströmungsgeschwindigkeiten, eine Vielzahl von vorbestimmten Kräften, wobei jede der vorbestimmten Kräfte der Vielzahl von vorbestimmten Kräften mit einer jeweiligen vorbestimmten Luftströmungsgeschwindigkeit der Vielzahl von vorbestimmten Luftströmungsgeschwindigkeiten, einer jeweiligen vorbestimmten Geschwindigkeit des zweiten Schiebers (23), einer jeweiligen vorbestimmten Ausrichtung der zweiten Schaufel (24) und einer jeweiligen vorbestimmten Ausrichtung des Segments der zweiten Bahn, auf der sich die zweite Schaufel (24) bewegt, um einen Endpunkt zu erreichen, verbunden ist, wobei die logische Steuereinheit (U) konfiguriert ist, um:
o eine Vielzahl von Luftströmungsgeschwindigkeiten über die Zeit durch den zweiten Geschwindigkeitssensor (VS2) zu erfassen,
o Erfassen einer Vielzahl von Kräften, die über die Zeit auf die zweite Schaufel (24) wirken, durch den zweiten Kraftsensor (FS2),
o Vergleichen der Geschwindigkeit des durch den zweiten Geschwindigkeitssensor (VS2) erfassten Luftstroms mit jeder gespeicherten vorbestimmten Luftstromgeschwindigkeit in der Speichereinrichtung (SM), und der Geschwindigkeit der zweiten Lamelle (24) mit jeder in der Speichereinrichtung (SM) gespeicherten vorbestimmten Geschwindigkeit der zweiten Lamelle, um eine vorbestimmte Kraft zu erhalten, die auf der Grundlage der Übereinstimmung zwischen der erfassten Luftströmungsgeschwindigkeit und einer gespeicherten vorbestimmten Luftströmungsgeschwindigkeit und der Übereinstimmung zwischen der berechneten Geschwindigkeit der zweiten Schaufel und einer gespeicherten vorbestimmten Geschwindigkeit der zweiten Schaufel ausgewählt wird,
o jede erfasste Kraft mit der vorbestimmten Kraft zu vergleichen, wenn eine erfasste Kraft kleiner als die vorbestimmte Kraft ist, ein Signal an die zweite Schaufeldreheinrichtung (25) zu senden, um die zweite Schaufel (24) so zu drehen, dass die zweite Schaufel (24) eine Ausrichtung hat, die gleich einer gespeicherten vorbestimmten Ausrichtung ist, die auf der Grundlage der vorbestimmten Kraft ausgewählt wird.

16. Windvorrichtung nach Anspruch 20 und Anspruch 15, wobei die logische Steuereinheit (U) so konfiguriert ist, dass sie ein Signal an die Führungsdrehvorrichtung (27) sendet, um das zweite Führungselement (22) so zu drehen, dass das zweite Führungselement (22) eine Ausrichtung hat, die gleich einer gespeicherten vorbestimmten Ausrichtung ist, die auf der Grundlage der Übereinstimmung zwischen der erfassten Luftströmungsgeschwindigkeit und einer gespeicherten vorbestimmten Luftströmung und auf der Grundlage der Übereinstimmung zwischen der berechneten Geschwindigkeit des zweiten Blattes und einer gespeicherten vorbestimmten Geschwindigkeit des zweiten Blattes ausgewählt wird.

17. Windvorrichtung nach einem der Ansprüche 13 bis 16, wobei das zweite Windsystem (2) umfasst:
- einen zweiten Bewegungsübertragungsmechanismus mit: mindestens ein zweites Drehelement (182), das mit dem zweiten Läufer (23) derart verbunden ist, dass die Bewegung des zweiten Läufers (23) aufgrund der Bewegung des zweiten Flügels (24) in der ersten Richtung oder in der zweiten Richtung jeweils die Drehung des zweiten Drehelements (182) in einer ersten Richtung oder in einer zweiten Richtung bewirkt, eine zweite Welle (A2), die eine Drehachse (A22) aufweist und so konfiguriert ist, dass sie sich um die Drehachse (A22) in einer vorbestimmten Richtung dreht, eine zweite Verbindungseinrichtung (28A, P21, P22, C21) zum Verbinden des zweiten Drehelements (182) mit der zweiten Welle (A2) auf eine solche Weise, dass die Drehung des zweiten Drehelements (182) in der ersten Richtung die Drehung der zweiten Welle (A2) in der vorbestimmten Richtung bewirkt oder dass die Drehung des zweiten Drehelements (182) in der ersten Richtung und der zweiten Richtung die Drehung der zweiten Welle (A2) in der vorbestimmten Richtung bewirkt, wobei das zweite Windsystem (2) so konfiguriert ist, dass es den Betrag der kinetischen Energie auf die zweite Welle (A2) überträgt, so dass die kinetische Energie des Luftstroms in mechanische Rotationsenergie der zweiten Welle (A2) umgewandelt wird.

18. Windvorrichtung nach Anspruch 6 und Anspruch 17, wobei der Bewegungsübertragungsmechanismus zum Übertragen der Bewegung von der Antriebswelle (DS) Verbindungsmittel (1800, C2) zum Verbinden der zweiten Welle (A2) mit der Antriebswelle (DS) umfasst, so dass die Drehung der ersten Welle (A1) und die Drehung der zweiten Welle (A2) die Drehung der Antriebswelle (DS) verursachen.

19. Windvorrichtung nach einem der vorhergehenden Ansprüche, wobei die Windvorrichtung ein drittes Windsystem (3) umfasst und das dritte Windsystem (3) umfasst: eine dritte Schaufelvorrichtung (31) umfasst: ein drittes Führungselement (32), das eine gekrümmte oder im Wesentlichen gekrümmte Form hat, die eine dritte Flugbahn definiert, die eine Vielzahl von Segmenten umfasst, wobei jedes Segment der Vielzahl von Segmenten durch einen ersten Endpunkt und einen zweiten Endpunkt begrenzt ist, einen dritten Läufer (33), der auf dem dritten Führungselement (32) in einer ersten Richtung und in einer zweiten Richtung, die der ersten Richtung entgegengesetzt ist, gleitet mindestens eine dritte Schaufel (34), die im Raum in Bezug auf eine Richtung eines Luftstroms ausrichtbar ist und an dem dritten Schieber (33) derart befestigt ist, dass, wenn der Luftstrom auf die dritte Schaufel (34) trifft, der Luftstrom die dritte Schaufel (34) bewegt und die Bewegung der dritten Schaufel (34) die Bewegung des dritten Schiebers (33) entlang des dritten Führungselements (32) in der ersten Richtung oder in der zweiten Richtung bewirkt, ein drittes Blattdrehmittel (35) zum Drehen des dritten Blattes (34) im Raum in Bezug auf den dritten Läufer (33), wobei das dritte Windsystem (3) umfasst: mindestens einen dritten Positionssensor (PS3) zum Erfassen der Position des dritten Flügels (34), wobei die folgenden Daten in dem Speichermittel (SM) gespeichert werden: die Position jedes Endpunktes jedes Segments der dritten Trajektorie, für jeden Endpunkt jedes Segments der dritten Bahn eine Vielzahl von vorbestimmten Abständen zwischen dem dritten Schieber (33) und dem Endpunkt, wobei jeder vorbestimmte Abstand der Vielzahl von vorbestimmten Abständen mit einer jeweiligen vorbestimmten Geschwindigkeit des dritten Messers (34) und einer jeweiligen vorbestimmten Ausrichtung des dritten Messers (34) verbunden ist, wobei die logische Steuereinheit (U) konfiguriert ist, um:
o Erfassen einer Vielzahl von Positionswerten, die dem dritten Schieber (33) über die Zeit zugeordnet sind, durch den dritten Positionssensor (PS3),
o berechnen: eine erste Positionsdifferenz zwischen einer Position des dritten Läufers (33), die in einem Zeitpunkt *tⱼ* erfasst wurde, wobei j=1,2...N, wobei N eine positive ganze Zahl ist, und einer Position, die in einem vorhergehenden Zeitpunkt *t*_{*j*-1} erfasst wurde, eine Zeitdifferenz zwischen dem Zeitpunkt *tⱼ* und dem vorhergehenden Zeitpunkt *t*_{*j*-1}, eine zweite Positionsdifferenz zwischen der Position eines Endpunkts eines Segments der dritten Trajektorie, auf die sich das dritte Blatt (34) zubewegt, wobei die Position in der Speichereinrichtung (SM) gespeichert ist, und der Position des dritten Schiebers (33), die Geschwindigkeit des dritten Messers (34) mit einem Modul, das gleich dem Verhältnis zwischen der ersten Positionsdifferenz und der Zeitdifferenz ist, und der Abstand des dritten Schiebers (34) in Bezug auf den Endpunkt des Segments der dritten Bahn gleich dem Ergebnis der zweiten Positionsdifferenz ist,
o wenn der Abstand gleich einem vorbestimmten Abstand der Vielzahl vorbestimmter Abstände ist, ein Signal an die dritte Schaufeldreheinrichtung (35) zum Drehen der dritten Schaufel (34) in einer solchen Weise zu senden, dass die dritte Schaufel (34) eine Ausrichtung hat, die gleich einer gespeicherten vorbestimmten Ausrichtung ist, die auf der Grundlage der Entsprechung zwischen dem Abstand des dritten Schiebers (33) von einem Endpunkt des Segments der dritten Flugbahn und einem gespeicherten vorbestimmten Abstand und auf der Grundlage der berechneten Geschwindigkeit der dritten Schaufel und einer gespeicherten vorbestimmten Geschwindigkeit der dritten Schaufel ausgewählt wird, so dass sich das aerodynamische Verhalten der dritten Schaufelvorrichtung (31) im Laufe der Zeit ändert, um die Menge an kinetischer Energie des Luftstroms zu maximieren, die von der dritten Schaufel (34) eingefangen wird.

20. Windvorrichtung nach dem vorhergehenden Anspruch, wobei das dritte Windsystem (3) umfasst:
- mindestens einen dritten Geschwindigkeitssensor (VS3) zur Erfassung der Geschwindigkeit des auf das dritte Blatt (34) auftreffenden Luftstroms,
- mindestens einen dritten Kraftsensor (FS3) zum Erfassen einer auf das dritte Blatt (34) wirkenden Kraft; wobei die folgenden Daten in dem Speichermittel (SM) gespeichert werden: eine Vielzahl von vorbestimmten Luftströmungsgeschwindigkeiten, eine Vielzahl von vorbestimmten Kräften, wobei jede vorbestimmte Kraft der vorbestimmten Kräfte mit einer jeweiligen vorbestimmten Luftströmungsgeschwindigkeit der vorbestimmten Luftströmungsgeschwindigkeiten, einer jeweiligen vorbestimmten Geschwindigkeit des dritten Schiebers (33), einer jeweiligen vorbestimmten Ausrichtung der dritten Schaufel (34) verbunden ist, wobei die logische Steuereinheit (U) konfiguriert ist, um:
o eine Vielzahl von Luftströmungsgeschwindigkeiten über die Zeit durch den dritten Geschwindigkeitssensor (VS3) zu erfassen,
o Erfassen einer Vielzahl von Kräften, die über die Zeit auf die dritte Schaufel (34) wirken, durch den dritten Kraftsensor (FS3),
o vergleichen die Geschwindigkeit des durch den dritten Geschwindigkeitssensor (VS3) erfassten Luftstroms mit jeder vorbestimmten Luftstromgeschwindigkeit, die in der Speichereinrichtung (SM) gespeichert ist, und die Geschwindigkeit der dritten Lamelle (34) mit jeder vorbestimmten Geschwindigkeit der dritten Lamelle, die in der Speichereinrichtung (SM) gespeichert ist, um eine vorbestimmte Kraft zu erhalten, die auf der Grundlage der Übereinstimmung zwischen der erfassten Luftströmungsgeschwindigkeit und einer gespeicherten vorbestimmten Luftströmungsgeschwindigkeit und auf der Grundlage der Übereinstimmung zwischen der berechneten Geschwindigkeit der dritten Schaufel und einer gespeicherten vorbestimmten Geschwindigkeit der dritten Schaufel ausgewählt wird,
o jede erfasste Kraft mit der vorbestimmten Kraft zu vergleichen, wenn eine erfasste Kraft kleiner als die vorbestimmte Kraft ist, ein Signal an die Schaufeldrehvorrichtung (35) zu senden, um die dritte Schaufel (34) so zu drehen, dass die dritte Schaufel (34) eine Ausrichtung hat, die gleich einer gespeicherten vorbestimmten Ausrichtung ist, die auf der Grundlage der vorbestimmten Kraft ausgewählt wird.

21. Windvorrichtung nach Anspruch 19 oder 20, wobei das dritte Windsystem (3) umfasst:
- einen dritten Bewegungsübertragungsmechanismus mit: mindestens ein drittes Drehelement (183), das mit dem dritten Läufer (33) derart verbunden ist, dass die Bewegung des dritten Läufers (33) aufgrund der Bewegung des dritten Flügels (34) in der ersten Richtung oder in der zweiten Richtung jeweils die Drehung des dritten Drehelements (183) in einer ersten Richtung oder in einer zweiten Richtung bewirkt, eine dritte Welle (A3), die eine Drehachse (A33) hat und so konfiguriert ist, dass sie sich um die Drehachse (A33) in einer vorbestimmten Richtung dreht, ein drittes Verbindungsmittel (38A, P31, P32, C31) zum Verbinden des dritten Drehelements (183) und der dritten Welle (A3) derart, dass die Drehung des dritten Drehelements (183) in der ersten Richtung und in der zweiten Richtung die Drehung der dritten Welle (A3) in der vorgegebenen Richtung bewirkt, wobei das dritte Windsystem (3) so konfiguriert ist, dass es den Betrag der kinetischen Energie auf die dritte Welle (A3) überträgt, so dass die kinetische Energie des Luftstroms in mechanische Rotationsenergie der dritten Welle (A3) umgewandelt wird.

22. Windvorrichtung nach einem der Ansprüche 19-21, wobei der Bewegungsübertragungsmechanismus zum Übertragen der Bewegung auf die Antriebswelle (DS) Verbindungsmittel (18000, C3) zum Verbinden der dritten Welle (A3) mit der Antriebswelle (DS) umfasst, so dass die Drehung der ersten Welle (A1), der zweiten Welle (A2) und der dritten Welle (A3) die Drehung der Antriebswelle (DS) bewirkt.

## Revendications

1. Appareil éolien comprenant:
- un premier système éolien (1) comprenant: un premier dispositif à pales (11) comprenant: un premier élément de guidage (12) définissant une première trajectoire comprenant un ou plusieurs segments, chacun étant délimité par un premier point d'extrémité et un second point d'extrémité, un premier coulisseau (13) coulissant sur ledit premier élément de guidage (12) dans une première direction et dans une seconde direction, opposée à ladite première direction, au moins une première pale (14) orientable dans l'espace par rapport à une direction d'un flux d'air et contrainte sur ledit premier coulisseau (13) de telle sorte que, lorsque ledit flux d'air entre en contact avec ladite première pale (14), ledit flux d'air déplace ladite première pale (14) et le mouvement de ladite première pale (14) entraîne le mouvement dudit premier coulisseau (13) le long dudit premier élément de guidage (12) dans ladite première direction ou dans ladite seconde direction, des moyens de rotation de la première pale (15) pour faire tourner ladite première pale (14) dans l'espace par rapport audit premier coulisseau (13), de manière à modifier un angle entre ladite première pale (14) et la direction dudit flux d'air, **caractérisé par**: au moins un premier capteur de position (PS1) pour détecter la position de ladite première pale (14),
- des moyens de stockage (SM) dans lesquels sont stockées les données suivantes: la position de chaque point d'extrémité de chaque segment de ladite première trajectoire. pour chaque point d'extrémité de chaque segment de ladite première trajectoire, une pluralité de distances prédéterminées entre ledit premier curseur (13) et ledit point d'extrémité, dans laquelle chaque distance prédéterminée de ladite pluralité de distances prédéterminées est associée à une vitesse prédéterminée respective de ladite première pale (14), à une orientation prédéterminée respective de ladite première pale (14) et à une orientation prédéterminée respective d'un segment de ladite première trajectoire:
- une unité de commande logique (U) configurée pour:
o acquérir au cours du temps une pluralité de positions dudit premier coulisseau (13), par l'intermédiaire dudit premier capteur de position (PS1),
o calculer: une première différence de position entre une position dudit premier curseur (13) acquise à un instant *tⱼ*, avec j=1,2...N, où N est un nombre entier positif, et une position acquise à un instant précédent *t*_{*j*-1}, une différence de temps entre l'instant *tⱼ* et l'instant précédent *t*_{*j*-1}, une seconde différence de position entre la position d'un point final d'un segment de ladite première trajectoire vers laquelle se déplace ladite première pale (14), cette position étant stockée dans lesdits moyens de stockage (SM), et la position dudit premier curseur (13), la vitesse de ladite première pale (14) avec un module égal au rapport entre ladite différence de première position et ladite différence de temps, et la distance de ladite première pale (14) par rapport audit point final dudit segment de ladite première trajectoire égale au résultat de ladite différence de deuxième position,
o lorsque ladite distance est égale à une distance prédéterminée de ladite pluralité de distances prédéterminées, envoyer un signal aux moyens de rotation de la première pale (15) pour faire tourner ladite première pale (14) de manière à ce que ladite première pale (14) ait une orientation égale à une orientation prédéterminée mémorisée qui est sélectionnée sur la base de la correspondance entre la distance de ladite première glissière (13) par rapport à un point final dudit segment de ladite première trajectoire et une distance prédéterminée mémorisée et la correspondance entre la vitesse calculée de ladite première pale et une vitesse prédéterminée mémorisée de ladite première pale, de sorte que le comportement aérodynamique dudit premier dispositif à pales (11) change au fil du temps pour maximiser la quantité d'énergie cinétique dudit flux d'air capturée par ladite première pale (14).

2. Appareil éolien selon la revendication précédente, dans lequel ledit premier dispositif à pales (11) comprend des moyens de rotation du premier guide (17) pour faire tourner ledit premier élément de guidage (12) dans l'espace, dans lequel ladite unité de commande logique (U) est configurée pour envoyer un signal auxdits premiers moyens de rotation (17) pour faire tourner ledit premier élément de guidage (12) de manière à ce que ledit premier élément de guidage (12) ait une orientation égale à une orientation prédéterminée stockée qui est sélectionnée sur la base de la correspondance entre la distance dudit premier curseur (13) d'un point d'extrémité dudit segment de ladite première trajectoire et une distance prédéterminée stockée et la correspondance entre la vitesse calculée de ladite première pale et une vitesse prédéterminée stockée de ladite première pale, de sorte que le comportement aérodynamique dudit premier dispositif à pales (11) change au fil du temps afin de maximiser davantage la quantité d'énergie cinétique dudit flux d'air capturée par ladite première pale (14).

3. Appareil éolien selon la revendication 1 ou 2, dans lequel ledit premier système éolien (1) comprend:
- au moins un premier capteur de vitesse (VS1) pour détecter la vitesse du flux d'air incident sur ladite première pale (14),
- au moins un premier capteur de force (FS1) pour détecter une force agissant sur ladite première pale (14); dans lequel les données suivantes sont stockées dans ledit moyen de stockage (SM): une pluralité de vitesses d'écoulement d'air prédéterminées, et une pluralité de forces prédéterminées, chaque force prédéterminée de ladite pluralité de forces prédéterminées étant associée à une vitesse d'écoulement d'air prédéterminée respective de ladite pluralité de vitesses d'écoulement d'air prédéterminées, à une vitesse prédéterminée respective dudit premier curseur (13), à une orientation prédéterminée respective de ladite première pale (14) et à une orientation prédéterminée respective dudit segment de ladite première trajectoire sur laquelle ladite première pale (14) se déplace pour atteindre un point final, dans lequel ladite unité de commande logique (U) est configurée pour:
o acquérir une pluralité de vitesses du flux d'air au fil du temps, par le biais dudit premier capteur de vitesse (VS1),
o acquérir une pluralité de forces agissant sur ladite première pale (14) au fil du temps, par le biais dudit premier capteur de force (FS1),
o comparer la vitesse du flux d'air détectée par ledit premier capteur de vitesse (VS1) à chaque vitesse de flux d'air prédéterminée stockée dans ledit moyen de stockage (SM), et la vitesse de ladite première pale (14) avec chaque vitesse prédéterminée de ladite première pale stockée dans lesdits moyens de stockage (SM), obtenir une force prédéterminée sélectionnée sur la base de la correspondance entre la vitesse d'écoulement de l'air acquise et une vitesse d'écoulement de l'air prédéterminée stockée et de la correspondance entre la vitesse calculée de ladite première pale et une vitesse prédéterminée stockée de ladite première pale,
o comparer chaque force acquise à ladite force prédéterminée,
o si une force acquise est inférieure à ladite force prédéterminée, envoyer un signal auxdits moyens de rotation de la première pale (15) pour faire tourner ladite première pale (14) de manière à ce que ladite première pale (14) ait une orientation égale à une orientation prédéterminée mémorisée qui est sélectionnée sur la base de ladite force prédéterminée.

4. Appareil éolien selon la revendication 2 et la revendication 3, dans lequel ladite unité de commande logique (U) est configurée pour envoyer un signal audit moyen de rotation du premier guide (17) pour faire tourner ledit premier élément de guidage (12) de manière à ce que ledit premier élément de guidage (12) ait une orientation égale à une orientation prédéterminée stockée qui est sélectionnée sur la base de la correspondance entre la vitesse d'écoulement d'air acquise et une vitesse d'écoulement d'air prédéterminée stockée et de la correspondance entre la vitesse calculée de ladite première pale et une vitesse prédéterminée stockée de ladite première pale.

5. Appareil éolien selon l'une quelconque des revendications précédentes, dans lequel ledit premier système éolien (1) comprend:
- un premier mécanisme de transmission de mouvement comprenant: au moins un premier élément rotatif (181) relié audit premier curseur (13) de telle sorte que le mouvement dudit premier curseur (13), dû au mouvement de ladite première pale (14) dans ladite première direction ou dans ladite seconde direction, entraîne respectivement la rotation dudit premier élément rotatif (181) dans une première direction ou dans une seconde direction, un premier arbre (A1) ayant un axe de rotation (A11) et configuré pour tourner autour dudit axe de rotation (A11) dans une direction prédéterminée, des premiers moyens de connexion (P11, P12, 18A, C12) pour connecter ledit premier élément rotatif (181) audit premier arbre (A1), de telle sorte que la rotation dudit premier élément rotatif (181) dans ladite première direction entraîne la rotation dudit premier arbre (A1) dans ladite direction prédéterminée ou que la rotation dudit premier élément rotatif (181) dans ladite première direction et dans ladite deuxième direction entraîne la rotation dudit premier arbre (A1) dans ladite direction prédéterminée, dans lequel ledit premier système éolien (1) est configuré pour transférer ladite quantité d'énergie cinétique audit premier arbre (A1), de sorte que l'énergie cinétique du flux d'air est transformée en énergie mécanique de rotation dudit premier arbre (A1).

6. Appareil éolien selon la revendication précédente, dans lequel ledit appareil éolien comprend:
- un arbre d'entraînement (DS),
- un mécanisme de transmission de mouvement pour transmettre le mouvement audit arbre d'entraînement (DS), comprenant: des moyens de liaison (180, C1) pour relier ledit premier arbre (A1) audit arbre d'entraînement (DS), de sorte que la rotation dudit premier arbre (A1) entraîne la rotation dudit arbre d'entraînement (DS).

7. Appareil éolien selon la revendication précédente, dans lequel ledit appareil éolien comprend:
- une pluralité de générateurs d'énergie électrique (G₁,G₂...G_{N}) pour générer de l'énergie électrique, où chaque générateur d'énergie électrique de ladite pluralité d'énergie électrique comprend un arbre respectif et un ou plusieurs arbres de générateurs d'énergie électrique respectifs (G₁,G₂...G_{N}) de ladite pluralité de générateurs d'énergie électrique (G₁,G₂...G_{N}) sont connectés à l'arbre d'entraînement (DS),
- un mécanisme de transmission de mouvement pour transmettre le mouvement de cet arbre d'entraînement (DS) à au moins un arbre respectif d'un générateur d'énergie électrique (G₁,G₂...G_{N}), comprenant: des moyens de connexion (192) pour connecter/déconnecter ledit arbre d'entraînement (DS) à/de un ou plusieurs arbres respectifs de générateurs d'énergie électrique (G₁,G₂...G_{N1}) de ladite pluralité de générateurs d'énergie électrique (G₁,G₂...G_{N}), dans lesquels les données suivantes sont stockées dans ledit moyen de stockage (SM): une pluralité de valeurs de puissance prédéterminées, un nombre prédéterminé respectif de générateurs d'énergie électrique est associé à chaque valeur de puissance prédéterminée de ladite pluralité de valeurs de puissance prédéterminées, dans lequel ladite unité de commande logique (U) est configurée pour:
o calculer une valeur de puissance à partir de la force acquise par ledit premier capteur de force (FS1) et de la vitesse calculée de ladite première pale et du nombre de ces un ou plusieurs générateurs d'énergie électrique (G₁,G₂...G_{N}) connectés à l'arbre d'entraînement (DS),
o comparer ladite valeur de puissance à chaque valeur de puissance prédéterminée pour déterminer le nombre prédéterminé de générateurs d'énergie électrique associés à ladite valeur de puissance prédéterminée,
o comparer le nombre de générateurs d'énergie électrique (G₁,G₂...G_{N}) connectés à l'arbre d'entraînement (DS) avec le nombre prédéterminé de générateurs d'énergie électrique,
o si le nombre de générateurs d'énergie électrique (G₁,G₂...G_{N}) connectés à l'arbre d'entraînement (DS) est inférieur au nombre prédéterminé de générateurs d'énergie électrique, calculer une différence entre ledit nombre prédéterminé de générateurs d'énergie électrique et ledit nombre de générateurs d'énergie électrique et le résultat de cette différence est le nombre de générateurs d'énergie électrique (G₁,G₂...G_{N}) à connecter à l'arbre d'entraînement (DS), et envoyer un signal de commande aux moyens de connexion (192) contenant une information relative au résultat de ladite différence pour connecter un nombre respectif de générateurs d'énergie électrique (G₁,G₂...G_{N}) à l'arbre d'entraînement (DS), si le nombre de générateurs d'énergie électrique (G₁,G₂...G_{N}) connectés à l'arbre d'entraînement (DS) est supérieur au nombre prédéterminé de générateurs d'énergie électrique, calculer une différence entre ledit nombre de générateurs d'énergie électrique (G₁,G₂...G_{N}) et ledit nombre prédéterminé de générateurs d'énergie électrique et le résultat de cette différence est le nombre de générateurs d'énergie électrique (G₁,G₂...G_{N}) à déconnecter de l'arbre d'entraînement (DS), et envoyer un signal de commande aux moyens de connexion (192) contenant une information concernant le résultat de cette différence pour déconnecter un nombre respectif de générateurs d'énergie électrique (G₁,G₂...G_{N}) de l'arbre d'entraînement (DS).

8. Appareil éolien selon l'une quelconque des revendications précédentes, dans lequel ledit premier système éolien (1) comprend un autre premier dispositif à pales (11'), dans lequel ledit autre premier dispositif à pales (11') comprend: un autre premier élément de guidage (12') définissant une autre première trajectoire comprenant un ou plusieurs segments, chacun d'entre eux étant délimité par un premier point d'extrémité et un second point d'extrémité, un autre premier coulisseau (13') coulissant sur ledit autre premier élément de guidage (12') dans une première direction et dans une seconde direction, opposée à ladite première direction, au moins une autre première pale (14') orientable dans l'espace par rapport à une direction dudit flux d'air et contrainte sur ledit autre premier coulisseau (13') de manière à ce que, lorsque ledit flux d'air entre en contact avec ladite première pale supplémentaire (14'), le mouvement de ladite première pale supplémentaire (14') entraîne le mouvement de ladite première glissière supplémentaire (13') le long dudit premier élément de guidage supplémentaire (12') dans ladite première direction ou dans ladite seconde direction, d'autres moyens de rotation de la première pale (15') pour faire tourner ladite première pale (14') dans l'espace par rapport à ladite première glissière (13'), dans lesquels ledit premier système éolien (1) comprend: un autre premier capteur de position (PS1') pour détecter la position de ladite autre première pale (14'), dans lequel les données suivantes sont stockées dans les moyens de stockage (SM): la position de chaque point final de chaque segment de ladite autre première trajectoire, pour chaque point final de chaque segment de ladite autre première trajectoire, une pluralité de distances prédéterminées entre ledit autre premier curseur (13') et ledit point final, dans laquelle chaque distance prédéterminée de ladite pluralité de distances prédéterminées est associée à une vitesse prédéterminée respective de ladite autre première pale (14'), à une orientation prédéterminée respective de ladite autre première pale (14') et à une orientation prédéterminée respective d'un segment de ladite autre première trajectoire, dans laquelle ladite unité de commande logique (U) est configurée pour:
o acquérir au fil du temps une pluralité de positions dudit autre premier coulisseau (13'), par l'intermédiaire dudit autre premier capteur de position (PS1'),
o calculer: une première différence de position entre une position dudit autre premier curseur (13') acquise à l'instant *tⱼ*, avec j=1,2...N, où N est un nombre entier positif, et une position acquise à un instant précédent *t*_{*j*-1}, une différence de temps entre l'instant *tⱼ* et l'instant précédent *t*_{*j*-1}, une deuxième différence de position entre la position d'un point final d'un segment de ladite autre première trajectoire vers laquelle se déplace ladite autre première pale (14'), dans laquelle cette position est stockée dans lesdits moyens de stockage (SM), et la position de ladite autre première glissière (13'), la vitesse de ladite autre première pale (14') avec un module égal au rapport entre ladite différence de première position et ladite différence de temps, et la distance de ladite autre première pale (14') par rapport audit point final dudit segment de ladite autre première trajectoire égale au résultat de ladite seconde différence de position,
o lorsque ladite distance est égale à une distance prédéterminée de ladite pluralité de distances prédéterminées, envoyer un signal aux moyens de rotation de ladite première pale supplémentaire (15') pour faire tourner ladite première pale supplémentaire (14') de manière à ce que ladite première pale supplémentaire (14') ait une orientation égale à une orientation prédéterminée stockée qui est sélectionnée sur la base de la correspondance entre la distance de ladite première pale supplémentaire (13') par rapport à un point final dudit segment de ladite première trajectoire supplémentaire et une distance prédéterminée stockée, et sur la correspondance entre la vitesse calculée de ladite première pale supplémentaire et une vitesse prédéterminée stockée de ladite première pale supplémentaire, de sorte que le comportement aérodynamique dudit autre premier dispositif à pales (11') change au fil du temps pour maximiser la quantité d'énergie cinétique dudit flux d'air capturée par ladite autre première pale (14').

9. Appareil éolien selon la revendication précédente, dans lequel ledit autre premier dispositif à pales (11') comprend d'autres moyens de rotation du premier guide (17') pour faire tourner ledit autre premier élément de guidage (12') dans l'espace, et dans lequel ladite unité de commande logique (U) est configurée pour envoyer un signal auxdits moyens de rotation du premier guide supplémentaire (17') pour faire tourner ledit premier élément de guidage supplémentaire (12') de manière à ce que ledit premier élément de guidage supplémentaire (12') ait une orientation égale à une orientation prédéterminée stockée qui est sélectionnée sur la base de la correspondance entre la distance dudit premier curseur supplémentaire (13') d'un point final dudit segment de ladite première trajectoire supplémentaire et une distance prédéterminée stockée et sur la correspondance entre la vitesse calculée de ladite première pale supplémentaire et une vitesse prédéterminée stockée de ladite première pale supplémentaire, de sorte que le comportement aérodynamique dudit autre premier dispositif à pales (11') change au fil du temps afin de maximiser davantage la quantité d'énergie cinétique dudit flux d'air capturée par ladite autre première pale (14').

10. Appareil éolien selon la revendication 8 ou 9, dans lequel ledit premier mécanisme de transmission de mouvement comprend: au moins un autre premier élément rotatif (181') relié audit autre premier curseur (13') dudit autre premier dispositif à pales (11') de telle sorte que le mouvement dudit autre premier curseur (13'), dû au mouvement de ladite autre première pale (14') dans ladite première direction ou dans ladite seconde direction, entraîne respectivement la rotation dudit autre premier élément rotatif (181') dans une première direction ou dans une seconde direction, d'autres premiers moyens de connexion (P11', P12', 18A', C12') pour connecter ledit autre premier élément rotatif (181') audit premier arbre (A1), de telle sorte que la rotation dudit autre premier élément rotatif (181') dans ladite première direction entraîne la rotation dudit premier arbre (A1) dans ladite direction prédéterminée ou que la rotation dudit autre premier élément rotatif (181') dans ladite première direction et dans ladite seconde direction entraîne la rotation dudit premier arbre (A1) dans ladite direction prédéterminée, dans lequel ledit premier système éolien (1) est configuré pour transférer ladite quantité d'énergie cinétique audit premier arbre (A1), de sorte que l'énergie cinétique du flux d'air est transformée en énergie mécanique de rotation dudit premier arbre (A1).

11. Appareil éolien selon l'une quelconque des revendications 8 à 10, dans lequel ledit mécanisme de transmission de mouvement comprend en outre: des moyens de connexion (R11, R12, CR, R21, R22) pour connecter le premier dispositif à pales (11) au premier dispositif à pales supplémentaire (11') de manière à ce que, lorsque le premier curseur (13) du premier dispositif à pales (11) se déplace dans ladite première direction/seconde direction, le premier curseur supplémentaire (13') du premier dispositif à pales supplémentaire (11') se déplace dans ladite seconde direction/première direction, dans lequel ladite unité de commande logique (U) est configurée pour envoyer un signal auxdits moyens de rotation de la première pale supplémentaire (15') pour faire tourner ladite première pale supplémentaire (14') lorsque la distance de ladite première pale supplémentaire (14') par rapport au point final dudit segment de ladite première trajectoire supplémentaire est égale à une distance prédéterminée stockée.

12. Appareil éolien selon la revendication 9 et la revendication 11, dans lequel ladite unité de commande logique (U) est configurée pour envoyer un signal auxdits moyens de rotation du premier guide supplémentaire (17') pour faire tourner ledit premier élément de guidage supplémentaire (12'), lorsque la distance de ladite première pale supplémentaire (14') par rapport au point final dudit segment de ladite première trajectoire supplémentaire est égale à une distance prédéterminée stockée.

13. Appareil éolien selon l'une quelconque des revendications précédentes, dans lequel ledit appareil éolien comprend un second système éolien (2) comprenant un second dispositif à pales (21), dans lequel ledit second dispositif à pales (21) comprend: un deuxième élément de guidage (22) définissant une deuxième trajectoire comprenant un ou plusieurs segments, chacun d'eux étant délimité par un premier point d'extrémité et un deuxième point d'extrémité, un second coulisseau (23) glissant sur ledit second élément de guidage (22) dans une première direction et dans une seconde direction, opposée à la première direction, au moins une deuxième pale (24) orientable dans l'espace par rapport à une direction d'un flux d'air et contrainte à ladite deuxième glissière (23) de manière à ce que, lorsque ledit flux d'air entre en contact avec ladite deuxième pale (24), ledit flux d'air déplace ladite deuxième pale (24) et que le déplacement de ladite deuxième pale (24) entraîne le déplacement de ladite deuxième glissière (23) le long dudit deuxième élément de guidage (22) dans ladite première direction ou dans ladite deuxième direction, des moyens de rotation de la deuxième pale (25) pour faire tourner ladite deuxième pale (24) dans l'espace par rapport à ladite deuxième glissière (23), dans lesquels ledit second système éolien (2) comprend: un deuxième capteur de position (PS2) pour détecter la position de ladite deuxième pale (24), dans lequel les données suivantes sont stockées dans ledit moyen de stockage (SM): la position de chaque point final de chaque segment de ladite seconde trajectoire, pour chaque point final de chaque segment de ladite seconde trajectoire, une pluralité de distances prédéterminées entre ledit second coulisseau (23) et ledit point final, où chaque distance prédéterminée de ladite pluralité de distances prédéterminées est associée à une vitesse prédéterminée respective de ladite seconde pale (24), à une orientation prédéterminée respective de ladite seconde pale (24) et à une orientation prédéterminée respective d'un segment de ladite seconde trajectoire; dans lequel ladite unité de commande logique (U) est configurée pour:
o acquérir au fil du temps une pluralité de positions dudit second coulisseau (23), par l'intermédiaire dudit second capteur de position (PS2),
o calculer: une première différence de position entre une position dudit second curseur (23) acquise à un instant *tⱼ*, avec j=1,2...N, où N est un nombre entier positif, et une position acquise à un instant précédent *t*_{*j*-1}, une différence de temps entre l'instant *tⱼ* et l'instant précédent *t*_{*j*-1}, une deuxième différence de position entre la position d'un point final d'un segment de ladite deuxième trajectoire vers lequel la deuxième pale (24) se déplace, cette position étant stockée dans les moyens de stockage (SM), et la position dudit deuxième curseur (23), la vitesse de ladite seconde pale (24) avec un module égal au rapport entre ladite différence de première position et ladite différence de temps, et la distance de ladite seconde pale (24) par rapport audit point final dudit segment de ladite seconde trajectoire égale au résultat de ladite seconde différence de position,
o lorsque ladite distance est égale à une distance prédéterminée de ladite pluralité de distances prédéterminées, envoyer un signal aux moyens de rotation de la deuxième pale (25) pour faire tourner ladite deuxième pale (24) de manière à ce que ladite deuxième pale (24) ait une orientation égale à une orientation prédéterminée stockée qui est sélectionnée sur la base de la correspondance entre la distance de ladite deuxième glissière (23) par rapport à un point final dudit segment de ladite deuxième trajectoire et une distance prédéterminée stockée et sur la correspondance entre la vitesse calculée de ladite deuxième pale et une vitesse prédéterminée stockée de ladite deuxième pale, de sorte que le comportement aérodynamique dudit second dispositif à pales (21) change au fil du temps pour maximiser la quantité d'énergie cinétique dudit flux d'air capturée par ladite seconde pale (24).

14. Appareil éolien selon la revendication précédente, dans lequel ledit deuxième dispositif à pales (21) comprend des moyens de rotation du deuxième guide (27) pour faire tourner ledit deuxième élément de guidage (22) dans l'espace, dans lequel ladite unité de commande logique (U) est configurée pour envoyer un signal auxdits moyens de rotation du second guide (27) pour faire tourner ledit second élément de guidage (22) de manière à ce que ledit second élément de guidage (22) ait une orientation égale à une orientation prédéterminée stockée qui est sélectionnée sur la base de la correspondance entre la distance dudit second curseur (23) d'un point d'extrémité dudit segment de ladite seconde trajectoire et une distance prédéterminée stockée et sur la correspondance entre la vitesse calculée de ladite seconde pale et une vitesse prédéterminée stockée de ladite seconde pale, de sorte que le comportement aérodynamique dudit second dispositif à pales (21) change au fil du temps pour maximiser davantage la quantité d'énergie cinétique dudit flux d'air capturée par ladite seconde pale (24).

15. Appareil éolien selon la revendication 13 ou 14, dans lequel ledit second système éolien (2) comprend:
- au moins un second capteur de vitesse (VS2) pour détecter la vitesse du flux d'air incident sur ladite seconde pale (24),
- au moins un deuxième capteur de force (FS2) pour détecter une force agissant sur ladite deuxième pale (24); les données suivantes sont stockées dans les moyens de stockage (SM): une pluralité de vitesses d'écoulement d'air prédéterminées, une pluralité de forces prédéterminées, où chacune des forces prédéterminées de ladite pluralité de forces prédéterminées est associée à une vitesse d'écoulement d'air prédéterminée respective de ladite pluralité de vitesses d'écoulement d'air prédéterminées, à une vitesse prédéterminée respective de ladite deuxième glissière (23), à une orientation prédéterminée respective de ladite deuxième pale (24) et à une orientation prédéterminée respective dudit segment de ladite deuxième trajectoire sur laquelle ladite deuxième pale (24) se déplace pour atteindre un point d'arrivée, où ladite unité de commande logique (U) est configurée pour:
o acquérir une pluralité de vitesses d'écoulement de l'air au fil du temps, par l'intermédiaire dudit second capteur de vitesse (VS2),
o acquérir une pluralité de forces agissant sur ladite seconde pale (24) au cours du temps, par le biais dudit second capteur de force (FS2),
o comparer la vitesse du flux d'air détectée par ledit second capteur de vitesse (VS2) avec chaque vitesse de flux d'air prédéterminée stockée dans ledit moyen de stockage (SM), et la vitesse de ladite seconde pale (24) avec chaque vitesse prédéterminée de ladite seconde pale stockée dans lesdits moyens de stockage (SM), obtenir une force prédéterminée sélectionnée sur la base de la correspondance entre la vitesse d'écoulement de l'air acquise et une vitesse d'écoulement de l'air prédéterminée stockée et de la correspondance entre la vitesse calculée de ladite seconde pale et une vitesse prédéterminée stockée de ladite seconde pale,
o comparer chaque force acquise à ladite force prédéterminée, si une force acquise est inférieure à ladite force prédéterminée, envoyer un signal aux moyens de rotation de la deuxième pale (25) pour faire tourner ladite deuxième pale (24) de manière à ce que ladite deuxième pale (24) ait une orientation égale à une orientation prédéterminée mémorisée qui est sélectionnée sur la base de ladite force prédéterminée.

16. Appareil éolien selon la revendication 20 et la revendication 15, dans lequel ladite unité de commande logique (U) est configurée pour envoyer un signal auxdits moyens de rotation du guide (27) pour faire tourner ledit deuxième élément de guidage (22) de manière à ce que ledit deuxième élément de guidage (22) ait une orientation égale à une orientation prédéterminée stockée qui est sélectionnée sur la base de la correspondance entre la vitesse du flux d'air acquise et un flux d'air prédéterminé stocké et sur la correspondance entre la vitesse calculée de ladite deuxième pale et une vitesse prédéterminée stockée de ladite deuxième pale.

17. Appareil éolien selon l'une quelconque des revendications 13 à 16, dans lequel ledit second système éolien (2) comprend:
- un second mécanisme de transmission de mouvement comprenant: au moins un deuxième élément rotatif (182) relié audit deuxième curseur (23) de telle sorte que le mouvement dudit deuxième curseur (23), dû au mouvement de ladite deuxième pale (24) dans ladite première direction ou dans ladite deuxième direction, entraîne respectivement la rotation dudit deuxième élément rotatif (182) dans une première direction ou dans une deuxième direction, un deuxième arbre (A2) ayant un axe de rotation (A22) et configuré pour tourner autour dudit axe de rotation (A22) dans une direction prédéterminée, deuxième moyen de connexion (28A, P21, P22, C21) pour connecter ledit deuxième élément rotatif (182) audit deuxième arbre (A2), de telle sorte que la rotation dudit deuxième élément rotatif (182) dans ladite première direction entraîne la rotation dudit deuxième arbre (A2) dans ladite direction prédéterminée ou que la rotation dudit deuxième élément rotatif (182) dans ladite première direction et ladite deuxième direction entraîne la rotation dudit deuxième arbre (A2) dans ladite direction prédéterminée, dans lequel ledit second système éolien (2) est configuré pour transférer ladite quantité d'énergie cinétique audit second arbre (A2), de sorte que l'énergie cinétique du flux d'air est transformée en énergie mécanique de rotation dudit second arbre (A2).

18. Appareil éolien selon la revendication 6 et la revendication 17, dans lequel ledit mécanisme de transmission de mouvement pour transmettre le mouvement depuis ledit arbre d'entraînement (DS) comprend des moyens de connexion (1800, C2) pour connecter ledit deuxième arbre (A2) audit arbre d'entraînement (DS), de sorte que la rotation dudit premier arbre (A1) et la rotation dudit deuxième arbre (A2) entraînent la rotation dudit arbre d'entraînement (DS).

19. Appareil éolien selon l'une quelconque des revendications précédentes, dans lequel ledit appareil éolien comprend un troisième système éolien (3) et ledit troisième système éolien (3) comprend: un troisième dispositif à pales (31) comprenant: un troisième élément de guidage (32) ayant une forme curviligne ou sensiblement curviligne définissant une troisième trajectoire comprenant une pluralité de segments, chaque segment de ladite pluralité de segments étant délimité par un premier point d'extrémité et un second point d'extrémité, un troisième curseur (33) glissant sur le troisième élément de guidage (32) dans une première direction et dans une deuxième direction, opposée à la première direction, au moins une troisième pale (34) orientable dans l'espace par rapport à une direction d'un flux d'air et contrainte à ladite troisième glissière (33) de telle sorte que, lorsque ledit flux d'air entre en contact avec ladite troisième pale (34), ledit flux d'air déplace ladite troisième pale (34) et le mouvement de ladite troisième pale (34) entraîne le mouvement de ladite troisième glissière (33) le long dudit troisième élément de guidage (32) dans ladite première direction ou dans ladite deuxième direction, des moyens de rotation de la troisième pale (35) pour faire tourner ladite troisième pale (34) dans l'espace par rapport à ladite troisième glissière (33), dans lesquels ledit troisième système éolien (3) comprend: au moins un troisième capteur de position (PS3) pour détecter la position de ladite troisième pale (34), dans lequel les données suivantes sont stockées dans ledit moyen de stockage (SM): la position de chaque point d'extrémité de chaque segment de ladite troisième trajectoire, pour chaque point final de chaque segment de ladite troisième trajectoire, une pluralité de distances prédéterminées entre ledit troisième curseur (33) et ledit point final, chaque distance prédéterminée de ladite pluralité de distances prédéterminées étant associée à une vitesse prédéterminée respective de ladite troisième pale (34) et à une orientation prédéterminée respective de ladite troisième pale (34), dans laquelle ladite unité de commande logique (U) est configurée pour:
o acquérir une pluralité de valeurs de position associées audit troisième curseur (33) au fil du temps, par le biais dudit troisième capteur de position (PS3),
o calculer: une première différence de position entre une position dudit troisième curseur (33) acquise à un instant *tⱼ*, avec j=1,2...N, où N est un nombre entier positif, et une position acquise à un instant précédent *t*_{*j*-1}, une différence de temps entre l'instant *tⱼ* et l'instant précédent *t*_{*j*-1}, une deuxième différence de position entre la position d'un point final d'un segment de ladite troisième trajectoire vers laquelle la troisième pale (34) se déplace, cette position étant stockée dans les moyens de stockage (SM), et la position dudit troisième curseur (33), la vitesse de ladite troisième pale (34) avec un module égal au rapport entre ladite différence de première position et ladite différence de temps, et la distance de ladite troisième pale (34) par rapport audit point final dudit segment de ladite troisième trajectoire égale au résultat de ladite deuxième différence de position,
o lorsque ladite distance est égale à une distance prédéterminée de ladite pluralité de distances prédéterminées, envoyer un signal aux moyens de rotation de la troisième pale (35) pour faire tourner ladite troisième pale (34) de manière à ce que ladite troisième pale (34) ait une orientation égale à une orientation prédéterminée stockée qui est sélectionnée sur la base de la correspondance entre la distance de ladite troisième glissière (33) par rapport à un point final dudit segment de ladite troisième trajectoire et une distance prédéterminée stockée et sur la base de la vitesse calculée de ladite troisième pale et d'une vitesse prédéterminée stockée de ladite troisième pale, de sorte que le comportement aérodynamique dudit troisième dispositif à pales (31) change au fil du temps pour maximiser la quantité d'énergie cinétique dudit flux d'air capturée par ladite troisième pale (34).

20. Appareil éolien selon la revendication précédente, dans lequel ledit troisième système éolien (3) comprend:
- au moins un troisième capteur de vitesse (VS3) pour détecter la vitesse du flux d'air incident sur ladite troisième pale (34),
- au moins un troisième capteur de force (FS3) pour détecter une force agissant sur ladite troisième pale (34); dans lequel les données suivantes sont stockées dans ledit moyen de stockage (SM): une pluralité de vitesses d'écoulement d'air prédéterminées, une pluralité de forces prédéterminées, chaque force prédéterminée étant associée à une vitesse d'écoulement d'air prédéterminée respective parmi les vitesses d'écoulement d'air prédéterminées, à une vitesse prédéterminée respective du troisième curseur (33) et à une orientation prédéterminée respective de la troisième pale (34), dans laquelle ladite unité de commande logique (U) est configurée pour:
o acquérir une pluralité de vitesses d'écoulement de l'air dans le temps, par le biais du troisième capteur de vitesse (VS3),
o acquérir une pluralité de forces agissant sur ladite troisième pale (34) au fil du temps, par le biais dudit troisième capteur de force (FS3),
o comparer la vitesse du flux d'air détectée par ledit troisième capteur de vitesse (VS3) avec chaque vitesse de flux d'air prédéterminée stockée dans ledit moyen de stockage (SM), et la vitesse de ladite troisième pale (34) avec chaque vitesse prédéterminée de ladite troisième pale stockée dans lesdits moyens de stockage (SM), obtenir une force prédéterminée sélectionnée sur la base de la correspondance entre la vitesse d'écoulement de l'air acquise et une vitesse d'écoulement de l'air prédéterminée stockée et sur la correspondance entre la vitesse calculée de ladite troisième pale et une vitesse prédéterminée stockée de ladite troisième pale,
o comparer chaque force acquise à ladite force prédéterminée, si une force acquise est inférieure à ladite force prédéterminée, envoyer un signal aux moyens de rotation de la pale (35) pour faire tourner ladite troisième pale (34) de manière à ce que ladite troisième pale (34) ait une orientation égale à une orientation prédéterminée stockée qui est sélectionnée sur la base de ladite force prédéterminée.

21. Appareil éolien selon la revendication 19 ou 20, dans lequel ledit troisième système éolien (3) comprend:
- un troisième mécanisme de transmission de mouvement comprenant: au moins un troisième élément rotatif (183) relié audit troisième curseur (33) de telle sorte que le mouvement dudit troisième curseur (33), dû au mouvement de ladite troisième pale (34) dans ladite première direction ou dans ladite deuxième direction, entraîne respectivement la rotation dudit troisième élément rotatif (183) dans une première direction ou dans une deuxième direction, un troisième arbre (A3) ayant un axe de rotation (A33) et configuré pour tourner autour de cet axe de rotation (A33) dans une direction prédéterminée, des troisièmes moyens de connexion (38A, P31, P32, C31) pour connecter ledit troisième élément rotatif (183) et ledit troisième arbre (A3), de telle sorte que la rotation dudit troisième élément rotatif (183) dans ladite première direction et dans ladite deuxième direction entraîne la rotation dudit troisième arbre (A3) dans ladite direction prédéterminée, dans lequel ledit troisième système éolien (3) est configuré pour transférer ladite quantité d'énergie cinétique audit troisième arbre (A3), de sorte que l'énergie cinétique du flux d'air est transformée en énergie mécanique de rotation dudit troisième arbre (A3).

22. Appareil éolien selon l'une quelconque des revendications 19 à 21, dans lequel ledit mécanisme de transmission de mouvement pour transmettre le mouvement à l'arbre d'entraînement (DS) comprend des moyens de connexion (18000, C3) pour connecter ledit troisième arbre (A3) à l'arbre d'entraînement (DS), de sorte que la rotation dudit premier arbre (A1), dudit deuxième arbre (A2) et dudit troisième arbre (A3) entraîne la rotation de l'arbre d'entraînement (DS).
